# EUROPÄISCHE PATENTSCHRIFT

(11) **EP 2 604 868 B1**
(45) Veröffentlichungstag und Bekanntmachung des Hinweises auf die Patenterteilung: **04.11.2015**
(21) Anmeldenummer: 12196618.8
(22) Anmeldetag: 12.12.2012
(51) Int. Cl.: F16B 12/20, F16B 12/22, F16B 23/00, E04B 1/26

(54) **Vorrichtung und Verfahren zum Verbinden von Bauteilen**
Method and device for connecting components
Dispositif et procédé destinés à la liaison de composants

(30) Priorität: 13.12.2011 AT 18282011
(43) Veröffentlichungstag der Anmeldung: 19.06.2013
(73) Patentinhaber: Wiehag Holding GmbH, 4950 Altheim (AT)
(72) Erfinder: Brunauer, Alfons, 4910 Tumeltsham (AT)
(74) Vertreter: Burger, Hannes

(56) Entgegenhaltungen:
- EP-A2- 2 093 334
- WO-A1-2006/089539
- DE-A1- 3 324 675
- DE-U1- 8 808 226
- DE-U1- 29 614 196
- FR-A- 509 547
- FR-A1- 2 605 340
- US-A- 5 076 723

## Beschreibung

Die Erfindung betrifft eine Vorrichtung sowie ein Verfahren zum Verbinden von Bauteilen über gegenseitig in Eingriff bringbare Verankerungselemente, wie dies in den Oberbegriffen der Ansprüche 1 und 19 beschrieben ist.

Aus der DE 296 14 196 U1 ist eine Vorrichtung zum Verbinden von Bauteilen über gegenseitig in Eingriff bringbare Verankerungselemente bekannt geworden. An einem Steher ist ein als Schraube ausgebildetes erstes Verankerungselement mit einem Stellmittel angeordnet, mit welchem ersten Verankerungselement ein plattenförmiges zweites Verankerungselement daran befestigt werden kann. Das zweite Verankerungselement weist einen dieses durchsetzenden Schlitz auf, der sich über eine Teilhöhe der Platte erstreckt. Das plattenförmige zweite Verankerungselement ist an einem Ende eines U-profilförmigen Querträgers angeordnet. Weiters durchragt das erste Verankerungselement mit seinem Schaft den Schlitz, wobei der Schraubenkopf an der vom Steher abgewendeten Seite des plattenförmigen zweiten Verankerungselementes anliegt und zum Anziehen der Schraubverbindung ein Zugang zum Stellmittel über den nach oben offenen Querträger möglich ist.

Eine andere Vorrichtung zum Verbinden von kastenförmigen Bauteilen über gegenseitig in Eingriff bringbare Verankerungselemente ist aus der DE 88 08 226 U1 bekannt geworden. An einer Seitenwand des ersten kastenförmigen Bauteils ist ein über die Seitenwand vorragendes V-förmig ausgebildetes erstes Verankerungselement angeordnet, welches an einem in den Innenraum des kastenförmigen Bauteils ragenden Befestigungsbolzen mit einem am Befestigungsbolzen ausgebildeten Gewinde befestigt ist. Das erste Verankerungselement wird zuerst in eine am zweiten Verankerungselement ausgebildete Hinterschneidung eingesetzt und anschließend mittels des am Kopf des Befestigungsbolzens angeordneten Stellmittels mit dem zweiten Verankerungselement verspannt. Der Betätigungskopf des Befestigungsbolzens ragt mit seinem daran ausgebildeten Stellmittel auf die vom zweiten Verankerungselement abgewendete Seite des ersten Verankerungselementes in den Innenraum des Kastens vor.

Die US 5,076,723 A bzw. die DE 40 26 407 A beschreiben einen Befestigungsanschlag für Schubladen-Frontblenden. An einer vorderen Außenseite der Seitenwand ist ein erstes Verankerungselement über sie Seitenwand vorragend ausgebildet. Das weitere Verankerungselement weist einen Befestigungssteg sowie einen U-förmig ausgebildeten und damit verbundenen Befestigungsbügel auf, welcher das zweite Verankerungselement ausbildet. Das bügelförmige zweite Verankerungselement ragt von der Frontblende in Richtung auf die Seitenwand in paralleler Ausrichtung dazu vor. Zwischen den beiden Schenkeln des Befestigungsbügels ist ein Aufnahmeschlitz ausgebildet, in welchem das erste Verankerungselement aufgenommen ist. Im ersten Verankerungselement ist weiters ein Innengewinde ausgebildet, in welches eine zusätzliche Schraube zur gegenseitigen Halterung der Frontblende an der Seitenwand eingeschraubt ist.

Eine weitere Vorrichtung zum gegenseitigen Verbinden von Bauteilen ist aus der FR 2 605 340 A1 bekannt geworden, bei der eine Schraube mit einem Schraubenkopf vorgesehen ist, welcher Schraubenkopf an seinem Umfang mit Stellmitteln versehen ist. Ein mit einem Längsschlitz zur Aufnahme des Schraubenschaftes ausgebildetes Rechteck-Hohlprofil ist mittels der Schraube an einem mit einer Gewindehülse versehenen Gegenprofil befestigbar.

Die DE 33 24 675 A1 beschreibt eine weitere Verbindungsvorrichtung zwischen Bauteilen mit ersten und zweiten Verankerungselementen. Dabei ist an einem Stirnende des ersten Bauteils ein erstes, als Schraube ausgebildetes Verankerungselement angeordnet. Das zweite, als Platte ausgebildete Verankerungselement weist eine schlitzförmige Öffnung zur Aufnahme des Schraubenschaftes auf. Um einen Zugang zum Schraubenkopf für die gegenseitige Befestigung der beiden Bauteile zu erlangen, ist ein zusätzliches U-förmiges Distanzelement vorgesehen.

Aus der EP 2 093 334 A2 sind gegengleich ausgebildete Verankerungselemente zum gegenseitigen Verbinden von Holzbauteilen bekannt geworden. Durch die beiden schräg bezüglich der Befestigungsebene verlaufend ausgerichteten Verankerungselemente wird ein formschlüssiges Einhängen der beiden Verankerungselemente ermöglicht. Zusätzliche Stellmittel an einem der Verankerungselemente sind keine vorgesehen.

Eine weitere Vorrichtung zum Verbinden von Bauteilen aus Holz ist aus der WO 2006/089539 A1 bekannt. Diese bekannte Vorrichtung kann im Hochlastbereich mit Vorteil eingesetzt werden, beispielweise im Bereich des Fertigteilhausbaus und im Hallenbau, wo zunehmend der Wunsch besteht, vorgefertigte, meist große und schwere Bauteile miteinander schnell, einfach, zuverlässig sowie präzise miteinander zu verbinden. Auch ist es im Hochlastbereich erforderlich, die zu verbindenden Bauteile ohne komplizierte Verbindungsbewegungen miteinander zu verbinden, da die Bauteile oft mittels eines Kranes eingehängt werden müssen, so dass beim Einhängen keine komplizierten Bewegungsabläufe möglich sind. Weiterhin ist es erforderlich, dass die Beschläge sehr stabil und robust sein müssen, damit sie beim Zusammenfügen der schweren Bauteile nicht beschädigt werden.

Die Vorrichtung umfasst hierzu gegenseitig in Eingriff bringbare Verankerungselemente, wobei ein erstes Verankerungselement an einem ersten Bauteil und ein zweites Verankerungselement an einem zweiten Bauteil befestigt werden. Das erste Verankerungselement weist eine Halteschraube mit einem zylindrischen Schaft und einem kegelförmigen Kopf sowie einer im Kopf angeordnete Justierausnehmung auf. Mittels der Justierausnehmung kann die Einschraubtiefe der Halteschraube vor der Montage der Bauteile eingestellt werden. Das zweite Verankerungselement weist eine Trägerplatte mit einer dem zweiten Bauteil zugewandten Befestigungsebene und eine in der Trägerplatte angeordnete randoffene Lagerausnehmung zum Einhängen des zweiten Verankerungselementes auf. Der zweite Bauteil (Nebenträger) wird durch Einhängen der an ihm befestigten Trägerplatte in die am ersten Bauteil befestigte Halteschraube mit dem ersten Bauteil (Hauptträger) verbunden. Sind der erste Bauteil und zweite Bauteil erst einmal durch Einhängen der Trägerplatte und Halteschraube miteinander verbunden, kann die Einschraubtiefe der Halteschraube nicht mehr verändert werden, da die Justierausnehmung durch die Trägerplatte verdeckt und nicht mehr zugänglich ist. Durch diese "fehlende" Justierung der Bauteile nach Montage können Toleranzen, beispielweise durch Fertigungsungenauigkeiten, Schwindungsmaße, Verdrehungen und dgl. der Bauteile nicht kompensiert werden. Ist nun aufgrund der Toleranzen die Einschraubtiefe der Halteschraube zu gering, wird zwar das ordnungsgemäße Einhängen sichergestellt, jedoch resultiert daraus ein Spiel zwischen Trägerplatte und Halteschraube, sodass keine passgenaue Verbindung zwischen den Bauteilen gegeben ist. Andererseits kann aufgrund der Toleranzen die Einschraubtiefe der Halteschraube zu groß sein, sodass ein Einhängen gar nicht mehr möglich ist. Der Bauteil muss sodann nochmals angehoben, die Halteschraube durch einen Monteur nachjustiert werden, ehe der Bauteil eingehängt werden kann. Daraus verlängern sich nicht nur die Montagearbeiten, sondern können die Bauteile durch das nochmalige Hochheben und Absenken beschädigt werden.

Andere Ausgestaltungen von Vorrichtungen zum Verbinden von Bauteilen aus Holz mit zumindest denselben Nachteilen sind auch aus der EP 2 093 334 A2, EP 1 785 535 B1 und DE 102 27 661 B3 bekannt.

Die Aufgabe der Erfindung liegt darin, eine Vorrichtung und ein Verfahren zum Verbinden von Bauteilen im Hochlastbereich über gegenseitig in Eingriff bringbare Verankerungselemente zu schaffen, welche(s) eine einfache Montage von Bauteilen begünstigt und eine hohe Verbindungsgenauigkeit zwischen den Bauteilen ermöglicht.

Die Aufgabe der Erfindung wird durch die im Kennzeichenteil des Anspruches 1 angegebenen Merkmale gelöst. Nach dem Einhängen der Verankerungselemente und Verbinden der Bauteile ist das Stellmittel über die Einführöffnung vorzugsweise von unten zugänglich damit der zweite Bauteil relativ zum ersten Bauteil nachjustiert werden kann, um Toleranzen, beispielweise durch Fertigungsungenauigkeiten, Schwindungsmaße, Verdrehungen und dgl. der Bauteile zu kompensieren. Somit entsteht eine Bauteileverbindung mit höchster Verbindungsgenauigkeit zwischen den Bauteilen. Zudem kann eine solche Vorrichtung besonders hohe, auf die Plattenebene senkrecht wirkende Zugkräfte (Normalkräfte) und in der Plattenebene wirkende Querkräfte, insbesondere im Bereich zwischen 80KN und 380 KN übertragen. Die Plattenebene entspricht dabei der Anschlussebene. Weiters ist von Vorteil, wenn das erste Verankerungselement den Stützabschnitt und einen koaxial zu diesem angeordneten und sich axial erstreckenden Führungsabschnitt umfasst, wobei der Stützabschnitt einen in radialer Richtung zum Führungsabschnitt vorragenden Kragen ausbildet. Dadurch ist zwischen den Verankerungselementen eine Formschlussverbindung vorhanden, sodass die Verbindung zwischen den Bauteilen mit hohen Zugkräften belastet werden kann. Eine vorteilhafte Ausgestaltung der Erfindung liegt darin, dass das Stellmittel durch im Kragen diametral gegenüberliegend angeordnete Bohrungen gebildet ist. Der Kragen ragt nach dem Einhängen des zweiten Verankerungselementes am ersten Verankerungselement soweit aus dem (halbkreisförmigen) Lagerabschnitt heraus, dass ein Umfangsabschnitt des Kragens an der Einführöffnung bzw. am Eingangsabschnitt freiliegt und zumindest eine der Bohrungen über die Einführöffnung bzw. den Eingangsabschnitt mit einem Werkzeug, beispielweise einem Spannschlüssel oder Spanndorn zugänglich ist. Das Werkzeug kann in die Bohrung formschlüssig eingreifen.

Ist der Führungsabschnitt der Verankerungselement jeweils mit einer zylindrischen Führungsfläche ausgebildet, so kann eine günstige Lastverteilung zwischen den miteinander eingreifenden Verankerungselementen erreicht werden.

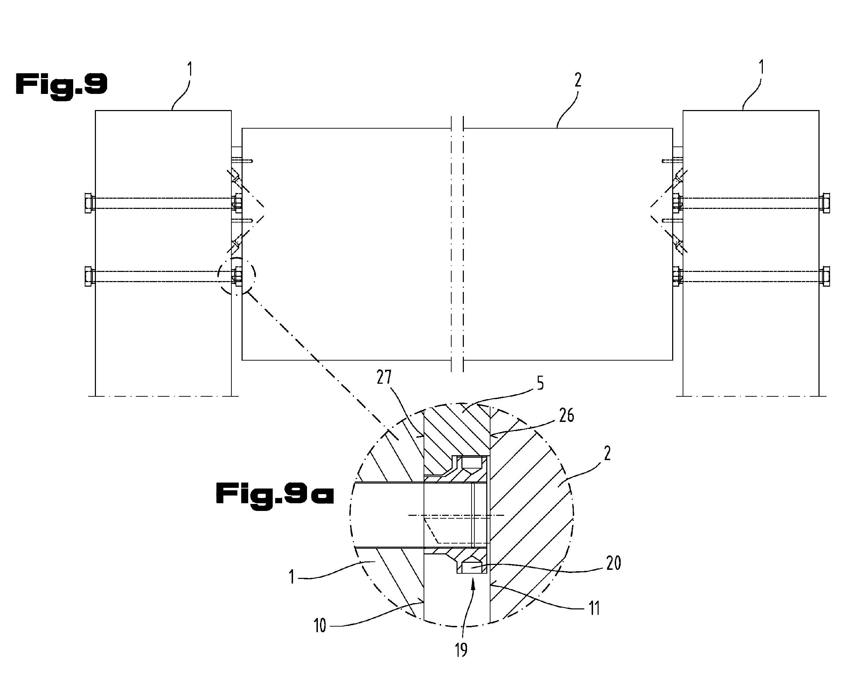

Nach einer Ausführung der Erfindung bildet der Führungsabschnitt der Verankerungselemente jeweils eine konisch verjüngende Auflauffläche aus. Die Ausbildung der konischen Auflaufflächen ist von Vorteil, da mit ihr eine Führungs- bzw. Zentrierfunktion zwischen den Verankerungselementen in axialer und radialer Richtung senkrecht auf die Befestigungsebene ermöglicht wird, wenn nach dem Einhängen des zweiten Verankerungselementes in das erste Verankerungselement eine nachträgliche Positionierung des zweiten Bauteils gegenüber dem ersten Bauteil erforderlich ist (Fig. 9, 9a).

Der Kragen bildet nach einer Ausführung der Erfindung eine senkrecht auf die Längsachse des ersten Verankerungselementes ausgerichtete Stellfläche aus. Wird nun das erste Verankerungselement mithilfe des Werkzeuges um dessen Längsachse gedreht, wird die Stellfläche bzw. der Stützabschnitt des ersten Verankerungselementes in senkrechter Richtung auf die Stützfläche des zweiten Verankerungselementes bewegt.

Eine besonders einfache Verstellbewegung des Stützabschnittes des ersten Verankerungselementes in senkrechter Richtung auf die Stützfläche des zweiten Verankerungselementes wird erreicht, wenn das erste Verankerungselement eine sich durch den Stützabschnitt und den Führungsabschnitt axial erstreckende Gewindebohrung umfasst.

Es ist auch von Vorteil, wenn der Lagerabschnitt der Lagerausnehmung zusätzlich einen an die Stützfläche in einer zweiten axialen Richtung senkrecht auf die Befestigungsebene anschließenden zweiten Führungsabschnitt umfasst, wobei der erste Führungsabschnitt und zweite Führungsabschnitt koaxial angeordnet sind. Sind sowohl die erste Führungsausnehmung als auch zweite Führungsausnehmung vorgesehen, kann das zweite Verankerungselement auf seiner Einhängebewegung am Stütz- und Führungsabschnitt des ersten Verankerungselementes abgestützt werden, sodass ein nachträglicher Positioniervorgang des zweiten Bauteils gegenüber dem ersten Bauteil erleichtert wird. Dies vor allem deswegen, weil das zweite Verankerungselement mit seinen zylindrischen Führungsabschnitten an den zylindrischen Stütz- und Führungsabschnitten des ersten Verankerungselementes gleitend geführt wird, wenn der Stützabschnitt in axialer Richtung senkrecht auf die Seitenfläche des ersten Bauteiles und relativ zur Stützfläche des zweiten Verankerungselementes verstellt wird.

Eine vorteilhafte Ausgestaltung der Erfindung liegt auch darin, dass die Trägerplatte zumindest an ihrem in Einhängerichtung des zweiten Verankerungselementes unteren Randbereich wenigstens einen an der Umfangskontur vorragenden Abweiservorsprung umfasst, welcher eine in der Verlängerung der die Trägerplatte parallel zur Befestigungsebene ausbildenden Anschlussebene in Einhängerichtung verjüngend verlaufende Abweiserfläche ausbildet. Auf diese Weise kann der zweite Bauteil ohne Verhakung mit dem ersten Bauteil verbunden werden. Soll der zweite Bauteil über an diesem stirnseitig befestigten zweiten Verankerungselementen mit auf ersten Bauteilen befestigten ersten Verankerungselemente mit den ersten Bauteilen verbunden werden, kann ein lichter Abstand zwischen den ersten Bauteilen eingestellt bzw. korrigiert werden, wenn der zweite Bauteil mit seinem Eigengewicht zwischen die einander zugewandten Seitenflächen der ersten Bauteile bewegt wird und die Verankerungselemente ineinander eingreifen.

Nach einer Ausbildung der Erfindung umfasst die Trägerplatte an ihrem in Einhängerichtung des zweiten Verankerungselementes gegenüber liegenden oberen Randbereich zwischen Vorsprüngen eine Ausnehmung zur Positionierung eines Rückhalteelementes. In dieser Ausnehmung kann das Rückhalteelement einer Rückhaltevorrichtung positioniert werden, wobei die Vorsprünge eine Positionierhilfe beim Anbringen des Rückhalteelementes bereitstellen. Damit kann eine über die Verankerungselemente definierte Positionslage des zweiten Bauteiles relativ zum ersten Bauteil fixiert werden.

Die Trägerplatte kann auch senkrecht zur Befestigungsebene verlaufende und sich durch die Trägerplatte hindurch erstreckende Positionierbohrungen umfassen. Die Positionierbohrungen sind mit gegenseitigem Abstand horizontal nebeneinander und/oder vertikal übereinander angebracht. Dies erweist sich von Vorteil, da zur Montage des zweiten Verankerungselementes an der Anschlussfläche zusätzliche Werkzeuge, wie eine Wasserwaage und dgl., oder Schablonen nicht nötig sind. Auch kann die Montage des zweiten Verankerungselementes an der Anschlussfläche durch eine einzige Person durchgeführt werden. Zusätzliches Hilfspersonal ist nicht nötig.

Von Vorteil ist auch, wenn das zweite Verankerungselement und/oder das erste Verankerungselement an einer Stützleiste abstützbar sind, wobei die Stützleiste über zumindest ein drittes Verankerungselement am ersten Bauteil befestigbar ist. Die Stützleiste weist an ihrem ersten Endbereich zumindest eine erste Lagerausnehmung zur bereichsweisen Aufnahme des ersten Verankerungselementes und ihrem zweiten Endbereich zumindest eine dritte Lagerausnehmung zur bereichsweisen Aufnahme des dritten Verankerungselementes auf, welche Lagerausnehmungen jeweils einen an einer Umfangskontur der Stützleiste eine Einführöffnung ausbildenden Eingangsabschnitt und einen Lagerabschnitt mit einer im Wesentlichen parallel zu einer dem ersten Bauteil zugewandten Befestigungsebene verlaufenden Stützfläche zur Anlage des Stützabschnittes des jeweiligen Verankerungselementes umfasst. Das zweite Verankerungselement lastet auf einer entsprechend der statischen Anforderung erforderlichen Anzahl an ersten Verankerungselementen und Stützleisten auf. Eine solche Vorrichtung eignet sich zur Übertragung höchster Zugkräfte (Normalkräfte) und Querkräfte.

Die Aufgabe der Erfindung wird aber auch durch die im Kennzeichenteil des Anspruches 19 angegebenen Maßnahmen gelöst.

Von Vorteil ist auch, wenn nach der Lagepositionierung des zweiten Bauteiles relativ zum ersten Bauteil ein Rückhalteelement mit dem ersten Bauteil verbunden und dabei mit dem Rückhalteelement die Positionslage des zweiten Bauteiles fixiert wird. Die Positionslage des zweiten Bauteiles wird fixiert, nachdem die Positionslage des zweiten Bauteiles relativ zum ersten Bauteil exakt eingestellt wurde. Somit entsteht eine Bauteileverbindung mit höchster Verbindungsgenauigkeit zwischen den Bauteilen, die zudem über das Rückhalteelement gegen ein Lösen gesichert ist.

Zum besseren Verständnis der Erfindung wird diese anhand der nachfolgenden Figuren näher erläutert.

Es zeigen jeweils in stark schematisch vereinfachter Darstellung:
- Fig. 1: eine Draufsicht auf eine Tragwerkskonstruktion mit über Verbindungsvorrichtungen miteinander verbundenen Haupt- und Nebenträgern;
- Fig. 2: eine Detailansicht auf eine erste Ausführung der Verbindungsvorrichtung zwischen einem Haupt- und Nebenträger gemäß Fig. 1;
- Fig. 3: eine erste Ausführung eines ersten Verankerungselementes der Verbindungsvorrichtung im Längsschnitt;
- Fig. 4: eine erste Ausführung eines zweiten Verankerungselementes der Verbindungsvorrichtung in Ansicht;
- Fig. 5: das zweite Verankerungselement in Ansicht gemäß den Linien V - V in Fig. 4;
- Fig. 6: das zweite Verankerungselement in Seitenansicht;
- Fig. 7: eine Ausschnittsvergrößerung der Verbindungsvorrichtung mit den in Eingriff befindlichen Verankerungselementen;
- Fig. 8 bis 10: eine Abfolge von Verfahrensschritten zum Herstellen der Bauteileverbindung in Seitenansicht;
- Fig. 11: eine zweite, nicht vom Schutzumfang umfasste Ausführung eines zweiten Verankerungselementes der Verbindungsvorrichtung in Ansicht;
- Fig. 12: eine zweite, nicht vom Schutzumfang umfasste Ausführung eines ersten Verankerungselementes der Verbindungsvorrichtung in Ansicht;
- Fig. 13: das zweite, nicht vom Schutzumfang umfasste Verankerungselement, geschnitten gemäß den Linien XIII - XIII in Fig. 12;
- Fig. 14: eine nicht vom Schutzumfang umfasste Ausführung eines Befestigungselementes für das zweite Verankerungselement gemäß der Fig. 12;
- Fig. 15: eine Detailansicht auf eine zweite, nicht vom Schutzumfang umfasste Ausführung der Verbindungsvorrichtung zwischen einem Haupt- und Nebenträger mit den Verankerungselementen gemäß den Fig. 11 und 12;
- Fig. 16: eine Detailansicht auf eine dritte Ausführung der Verbindungsvorrichtung zwischen einem Haupt- und Nebenträger mit den Verankerungselementen;
- Fig. 17: eine vierte Ausführung einer Verbindungsvorrichtung mit Stützleisten in Ansicht;
- Fig. 18: die Verbindungsvorrichtung mit den Stützleisten nach Fig. 17 und den Bauteilen in Seitenansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

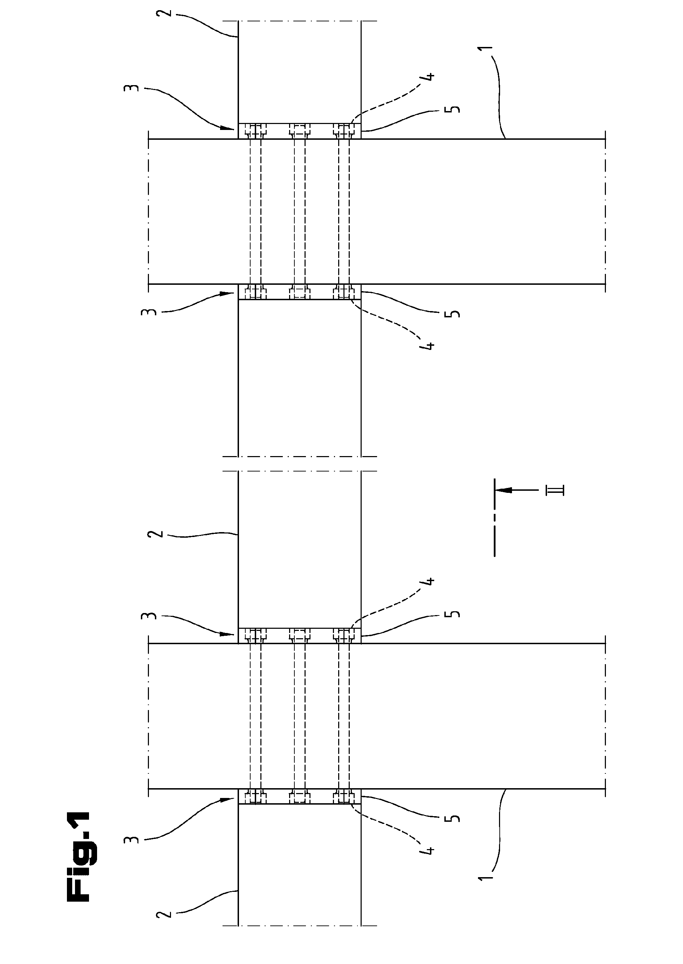

In Fig. 1 ist eine Draufsicht auf eine Tragwerkskonstruktion, wie sie beispielweise im Hallanbau als Dachtragwerk realisiert wird, gezeigt. Solche Tragwerkskonstruktion umfassen erste Bauteile 1, welche üblicherweise als Hauptträger bezeichnet werden, und zweite Bauteile 2, welche üblicherweise als Nebenträger bezeichnet werden. Die zweiten Bauteile 2 können sich zwischen den ersten Bauteilen 1 erstrecken. Eine Tragwerkskonstruktion kann abhängig von der statischen Beanspruchung auf das Tragwerk aus einer entsprechenden Anzahl von Hauptträgern und Nebenträgern bestehen. Die Bauteile 1, 2 sind beispielweise Holzbauteile und/oder Stahlbauteile. Auch kann einer der Bauteile 1, 2 ein Betonbauteil sein.

Die Verbindung zwischen den Bauteilen 1, 2 erfolgt über die nachfolgend beschriebene Vorrichtung 3. Bevorzugt sind die Bauteile 1, 2 lösbar miteinander verbunden.

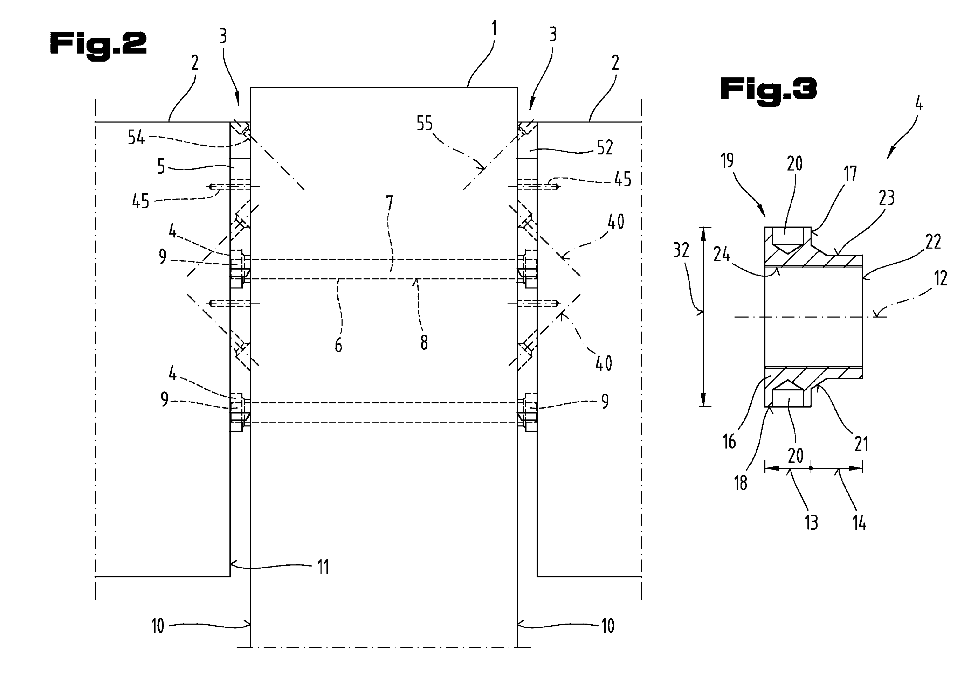

In Fig. 2 ist eine Vorrichtung 3 zum Verbinden von Bauteilen 1, 2 über gegenseitig in Eingriff bringbare Verankerungselemente 4, 5 gezeigt. Dabei ist zumindest ein erstes Verankerungselement 4 am ersten Bauteil 1 und zumindest ein zweites Verankerungselement 5 am zweiten Bauteil 2 befestigt.

Der erste Bauteil 1 ist mit zumindest einem Anschlusselement 6 versehen, welches über einen Ankerabschnitt 7 in einer Aufnahme 8 im ersten Bauteil 1 verankert ist und mit einem Anschlussabschnitt 9 an einer dem zweiten Bauteil 2 zugewandten Seitenfläche 10 vorragt. Das erste Verankerungselement 4 kann mit dem Anschlussabschnitt 9 verbunden werden. Nach gezeigter Ausführung ist das Anschlusselement 6 durch eine Gewindestange gebildet, welche sich in eine Aufnahmebohrung im ersten Bauteil 1 hinein erstreckt und mit zumindest einem ihrer Enden an der Seitenfläche 10 mit einem Gewindeabschnitt vorragt, auf welchem das erste Verankerungselement 4 aufgeschraubt werden kann.

Auch kann die Gewindestange sich durch den ersten Bauteil 1 hindurch erstrecken und mit ihren Enden an voneinander abgewandten Seitenflächen 10 vorragen. Damit wird die Möglichkeit geschaffen, dass auf beiden Seiten des ersten Bauteils 1 zweite Bauteile 2 angeordnet und jeweils über die Vorrichtung 3 miteinander verbunden werden können, wie in den Fig. 1 und 2 gezeigt.

Ist hingegen auf nur einer Seite des ersten Bauteils 1 zumindest ein zweiter Bauteil 2 angeordnet, so muss ein Anschlussabschnitt 9 nur auf einer Seite aus dem ersten Bauteil 1 herausgeführt werden. Wird eine Gewindestange eingesetzt, so kann diese in einer als Sackloch ausgebildeten Aufnahmebohrung verankert, beispielweise eingeklebt werden, oder wird auf dem an der ersten Seitenfläche 10 vorragenden ersten Anschlussabschnitt das erste Verankerungselement 4 und auf dem an der zweiten Seitenfläche 10 vorragenden zweiten Anschlussabschnitt eine vorzugsweise selbstsichernde Schraubenmutter angeordnet.

Wenngleich nach gezeigter Ausführung das erste Verankerungselement 4 mit einem Anschlusselement 9 verbunden wird, ist es genauso gut möglich, dass das Verankerungselement 4 das Anschlusselement 9 umfasst und mit dem Anschlusselement 9 einteilig ausgebildet ist. In der Darstellung gemäß den Fig. 1 und 2 sind drei Verankerungselemente 4 und drei Anschlusselemente 6 vorgesehen, welche gemäß obiger Ausführung gestaltet sein können. Die Anzahl der Verankerungselemente 4 und Anschlusselemente 6 kann abhängig von der mechanischen Beanspruchung auf die Vorrichtung 3 variieren.

Die Verwendung eines sich durch den ersten Bauteil 1 hindurch erstreckenden Anschlusselementes 6, beispielweise Gewindestange, zur Aufnahme eines ersten Verankerungselementes 4 an einem Anschlussabschnitt 9 am ersten Ende und gegebenenfalls einem Anschlussabschnitt 9 am zweiten Ende, hat den Vorteil, dass Zugkräfte und Druckkräfte quer durch den ersten Bauteil 1 (Hauptträger) geleitet werden und sich dadurch eine besonders günstige Kraftverteilung ergibt.

Das zweite Verankerungselement 5 ist über durch in Fig. 2 in strichpunktierte Linien angedeutete Befestigungsmittel, wie Befestigungsschrauben oder Befestigungsnägel, an einer Anschlussfläche 11 mit dem zweiten Bauteil 2 verbunden. Die Anschlussfläche 11 ist durch die Stirnfläche des zweiten Bauteils 2 gebildet. Wie in der Fig. 2 ersichtlich, erstrecken sich die Längsachsen der Befestigungsmittel 40 in einer Vertikalebene in entgegengesetzten Winkelrichtungen, wobei die Längsachsen aufeinander zulaufen oder auseinanderlaufen können. Ebenso können die Längsachsen der Befestigungsmittel 40 aber auch in einer Vertikalebene um denselben Winkel in nur einer Winkelrichtung verlaufen. Auch ist eine Kombination von Befestigungsmitteln 40 mit entgegengesetzten und gleichen Winkelrichtungen möglich. Die Längsachsen der Befestigungsmittel 40 schließen jeweils mit der Anschlussfläche 11 einen Winkel α zwischen 15° und 45° ein. Dadurch wird eine optimierte Aufteilung der Tragkräfte in vertikaler Richtung als auch horizontaler Richtung erreicht.

In Fig. 3 ist das erste Verankerungselement 4 näher dargestellt. Dieses umfasst in Richtung einer Längsachse 12 einen Stützabschnitt 13 und einen zu diesem koaxial erstreckenden Führungsabschnitt 14.

Der Stützabschnitt 13 bildet einen in radialer Richtung am schaftförmigen Führungsabschnitt 14 vorragenden Kragen 16 aus, welcher eine sich in radialer Richtung erstreckende Stellfläche 17 und/oder eine sich in axialer Richtung erstreckende, bevorzugt zylindrische Führungsfläche 18 aufweist. Die Stellfläche 17 verläuft bevorzugt senkrecht zur Längsachse 12.

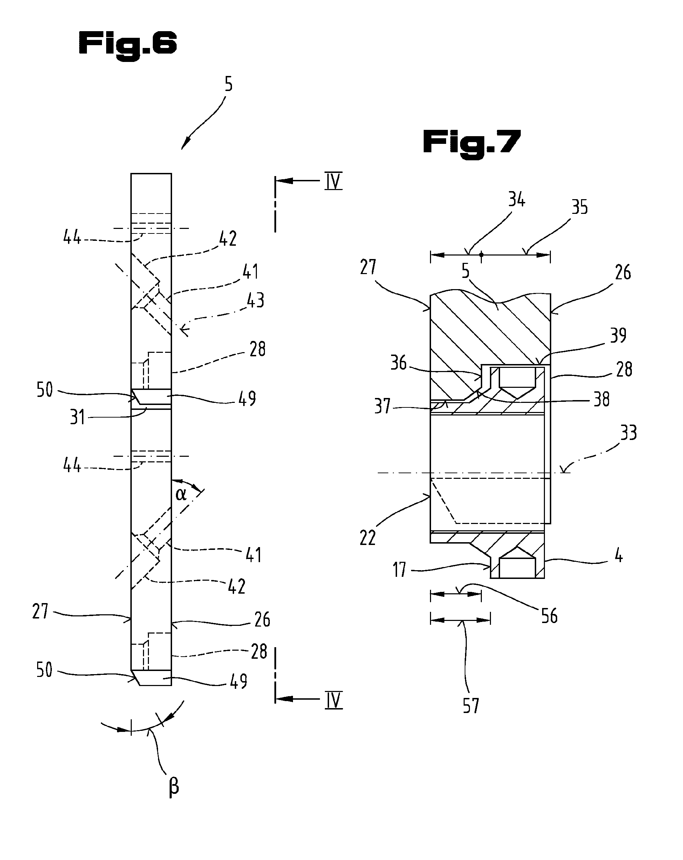

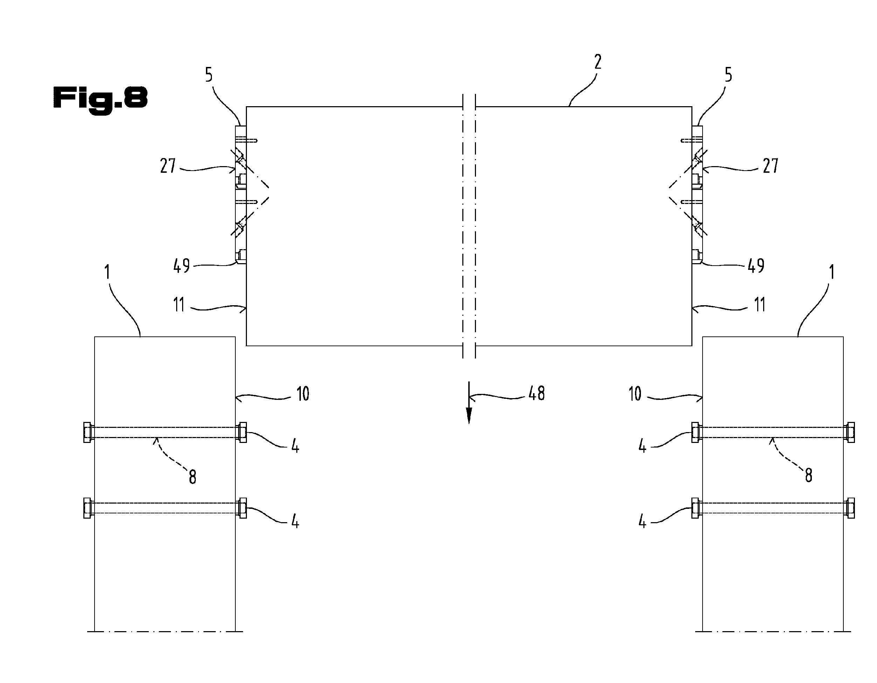

Das erste Verankerungselement 4 umfasst ferner ein Stellmittel 19, mittels welchem nach dem Verbinden der Bauteile 1, 2 über die gegenseitig in Eingriff bringbaren Verankerungselemente 4, 5 der Stützabschnitt 13 relativ zu einer Stützfläche 36 (Fig. 7) des zweiten Verankerungselementes 5 bewegbar ist, wie dies noch in den Fig. 8 bis 10 beschrieben wird. Das Stellmittel 19 ist nach gezeigter Ausführung durch im Kragen 16 an der Führungsfläche 18 vertieft und diametral gegenüberliegend angeordnete Bohrungen 20 gebildet.

Der Führungsabschnitt 14 ragt am Stützabschnitt 13 vor und umfasst eine zur Stellfläche 17 parallel verlaufende Anlagefläche 22 und/oder eine in axialer Richtung und koaxial zum Stützabschnitt 13 verlaufende, bevorzugt zylindrische Führungsfläche 23. Die zylindrische Führungsfläche 23 ist an einem Führungszapfenausgestaltet. Die Anlagefläche 22 verläuft senkrecht zur Längsachse 12.

Zusätzlich kann der Führungsabschnitt 14 eine sich ausgehend von der Stellfläche 17 in Richtung der zylindrischen Führungsfläche 23 konisch verjüngende Auflauffläche 21 ausbilden, deren Funktion noch beschrieben wird.

Ferner umfasst das erste Verankerungselement 4 einen Anschlussabschnitt 24, welcher beispielweise als eine sich durch den Stützabschnitt 13 und den Führungsabschnitt 14 axial erstreckende Gewindebohrung gestaltet ist. Andererseits kann sich die Gewindebohrung auch nur über die Länge des Führungsabschnittes 14 erstrecken.

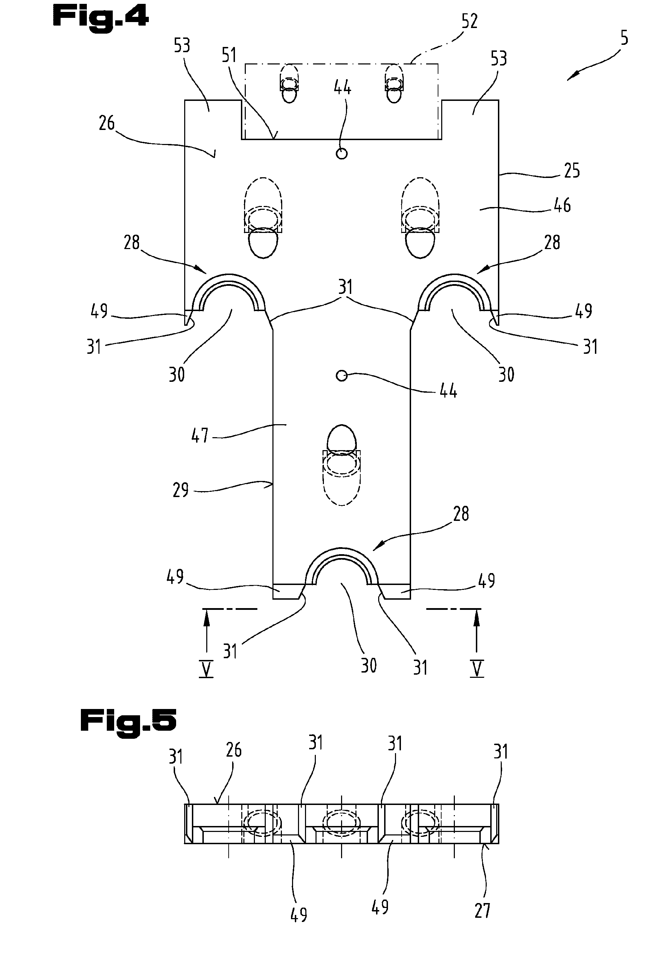

In den Fig. 4 bis 7 ist das zweite Verankerungselement 5 in unterschiedlichen Ansichten gezeigt. Dieses umfasst eine Trägerplatte 25 mit einer Befestigungsebene 26 und einer zu dieser zumindest abschnittsweise parallel verlaufenden Anschlussebene 27. Die Trägerplatte 25 umfasst einen Flansch 46 und einen an diesem mit einer geringeren Breite vorragenden Steg 47. Sie ist demnach annähernd T-förmig gestaltet.

An der Trägerplatte 25 ist zumindest eine Lagerausnehmung 28 zur Aufnahme des ersten Verankerungselementes 4 vorgesehen. Die Lagerausnehmung 28 ist entweder unmittelbar in der Trägerplatte 25 ausgearbeitet oder an einem an der Trägerplatte 25 vorragenden (nicht dargestellten) Bauteil ausgearbeitet. Nach gezeigter Ausführung sind an der Trägerplatte 25 drei identisch ausgebildete Lagerausnehmungen 28 jeweils zur Aufnahme eines ersten Verankerungselementes 4 vorgesehen. Die erste Lagerausnehmung 28 ist im Endbereich des vorkragenden Steges 47 angeordnet. Die zweite Lagerausnehmung 28 und dritte Lagerausnehmung 28 sind beidseitig zum Steg 28 spiegelbildlich und in einem dem Steg 28 zugewandten Endbereich angeordnet.

Die Lagerausnehmung 28 umfasst einen, an einer Umfangskontur 29 der Trägerplatte 25 eine Einführöffnung 30 ausbildenden Eingangsabschnitt und einen an diesen anschließenden Lagerabschnitt. Die Einführöffnung 30 ist durch sich von der Umfangskontur 29 der Trägerplatte 25 in Richtung des Lagerabschnittes erstreckende und geneigt aufeinander zulaufende Einführschrägen 31 bzw. Schrägflächen begrenzt. Demnach ist der Eingangsabschnitt V-förmig gestaltet. Eine Öffnungsweite zwischen den Einführschrägen 31 ist größer als ein Durchmesser 32 (Fig. 3) des Stützabschnittes 13. Dadurch wird eine Führungs- bzw. Zentrierfunktion zwischen den Verankerungselementen 4, 5 in radialer Richtung senkrecht auf die Befestigungsebene 26 erreicht, wenn der zweite Bauteil 2 durch Einhängen des zweiten Verankerungselementes 5 in das erste Verankerungselement 4 mit dem ersten Bauteil 1 verbunden wird. Dabei wird das zweite Verankerungselement 5 bei der Einhängebewegung über die Einführschrägen 31 am Stützabschnitt 13 des (ortsfesten) ersten Verankerungselementes 4 gleitend geführt und der zweite Bauteil 2 gegenüber dem ersten Bauteil 2 positioniert. Die Einführschrägen 31 sind jeweils annähernd über die gesamte Dicke der Trägerplatte 25 ausgebildet, wie in Fig. 6 ersichtlich.

Der Lagerabschnitt kann koaxial einander gegenüberliegende und sich in Richtung einer senkrecht auf die Befestigungsebene 26 ausgerichteten Längsachse 33 axial erstreckende Führungsabschnitte 34, 35 sowie eine im Wesentlichen parallel zur Befestigungsebene 26 verlaufende Stützfläche 36 zur Anlage der Stellfläche 17 des Stützabschnittes 13 umfassen. Andererseits kann der Lagerabschnitt auch nur den sich in Richtung einer senkrecht auf die Befestigungsebene 26 ausgerichteten Längsachse 33 axial erstreckenden ersten Führungsabschnitt 34 sowie die im Wesentlichen parallel zur Befestigungsebene 26 verlaufende Stützfläche 36 zur Anlage der Stellfläche 17 des Stützabschnittes 13 umfassen.

Der erste Führungsabschnitt 34 umfasst eine in axialer Richtung senkrecht auf die Befestigungsebene 26 verlaufende erste Führungsausnehmung mit einer zylindrischen Führungsfläche 37. Die Führungsausnehmung ist annähernd halbkreisförmig gestaltet. Zusätzlich kann der erste Führungsabschnitt 34 eine sich ausgehend von der Stützfläche 36 in Richtung der zylindrischen Führungsausnehmung konisch verjüngende Auflauffläche 38 ausbilden. Genauso gut kann der erste Führungsabschnitt 34 auch nur die zylindrische Führungsfläche 37 oder die konische Auflauffläche 38 umfassen.

Der zweite Führungsabschnitt 35 umfasst eine in axialer Richtung senkrecht auf die Befestigungsebene 26 verlaufende zweite Führungsausnehmung mit einer zylindrischen Führungsfläche 39. Die Führungsausnehmung ist annähernd halbkreisförmig gestaltet. Die zweite Führungsfläche 39 verläuft koaxial zur ersten Führungsfläche 37. Der Durchmesser der zweiten Führungsfläche 39 ist größer als der Durchmesser der ersten Führungsfläche 37, sodass zwischen ihnen eine Abstufung entsteht und sich die Stützfläche 36 in radialer Richtung zwischen den zylindrischen Führungsflächen 37, 39 erstreckt.

Zumindest der Kragen 16 ragt nach dem Einhängen des zweiten Verankerungselementes 5 am ersten Verankerungselement 4 soweit aus der (halbkreisförmigen) Führungsausnehmung heraus, dass ein Umfangsabschnitt des Kragens 16 an der Einführöffnung 30 bzw. am Eingangsabschnitt freiliegt und zumindest eine der Bohrungen 20 über die Einführöffnung 30 bzw. den Eingangsabschnitt mit einem Werkzeug, beispielweise einem Spannschlüssel oder Spanndorn zugänglich ist. Das Werkzeug kann in die Bohrung 20 formschlüssig eingreifen.

Wie auch ersichtlich, ist das zweite Verankerungselement 5 über die in Fig. 2 in strichpunktierte Linien angedeutete Befestigungsmittel 40, wie Befestigungsschrauben oder Befestigungsnägel, an der Anschlussfläche 11 mit dem zweiten Bauteil 2 verbunden.

Die Trägerplatte 25 ist zu dessen Befestigung an der Anschlussfläche 11 von Befestigungsbohrungen 41 durchsetzt, welche der Aufnahme von Befestigungsschrauben oder Befestigungsnägel dienen und jeweils eine Senkung 42 für den Schraubenkopf oder Nagelkopf aufweisen. Die Senkungen 42 sind in axialer Richtung in der Verlängerung der Befestigungsbohrungen 41 und in der Anschlussebene 27 vertieft angeordnet. Wie in der Fig. 6 ersichtlich, erstrecken sich die Längsachsen bzw. Bohrungsachsen 43 der Befestigungsbohrungen 41 in einer Vertikalebene in entgegengesetzten Winkelrichtungen, wobei die Längsachsen aufeinander zulaufen oder auseinanderlaufen können. Ebenso können die Längsachsen der Befestigungsmittel 40 aber auch in einer Vertikalebene um denselben Winkel in nur einer Winkelrichtung verlaufen. Die Längsachsen der Befestigungsbohrungen 41 schließen jeweils mit der Befestigungsebene 26 einen Winkel α zwischen 15° und 45° ein.

Wie in den Fig. 4 und 6 auch ersichtlich, umfasst die Trägerplatte 25 senkrecht zur Befestigungsebene 26 verlaufende und sich durch die Trägerplatte 25 hindurch erstreckende Positionierbohrungen 44. Die erste Positionierbohrung 44 und zweite Positionierbohrung 44 sind, wie in Fig. 4 ersichtlich, vertikal übereinander angeordnet. Es ist natürlich auch möglich, dass die erste Positionierbohrung 44 und zweite Positionierbohrung 44 horizontal einander gegenüberliegen. Genauso gut können die erste Positionierbohrung 44 und zweite Positionierbohrung 44 gegenüber einer Senkrechten auch diagonal einander gegenüberliegen. Wesentlich ist, dass die erste Positionierbohrung 44 und zweite Positionierbohrung 44 in einem gegenseitigen Abstand angeordnet sind. Dadurch wird die Positionierung der Trägerplatte 25 relativ zur Anschlussfläche 11 sowohl gegenüber der Vertikalen als auch Horizontalen ermöglicht. Dadurch wird eine einfache Befestigung des zweiten Verankerungselementes 5 an der Anschlussfläche 11 am zweiten Bauteil 2 erreicht.

Der zweite Bauteil 2 wird vorzugsweise vollautomatisch in einem Bearbeitungszentrum an der Anschlussfläche 11 mit zu den Positionierbohrungen 44 korrespondierenden Positionierbohrungen 45 (Fig. 2) versehen. Ein derartiges CNC (Computerized Numerical Control)-Bearbeitungszentrum zeichnet sich durch die hohe Wiederholgenauigkeit und hohe Fertigungsgenauigkeiten aus. Mit anderen Worten, die Positionierbohrungen 45 können innerhalb engster Fertigungstoleranzen an der Anschlussfläche 11 und auch sehr wirtschaftlich hergestellt werden. Nachdem die Positionierbohrungen 45 am zweiten Bauteil 2 sehr genau vorgefertigt sind, ist auch eine exakte Positionierung des zweiten Verankerungselementes 5 an der Anschlussfläche 11 möglich. Der Monteur kann dabei das zweite Verankerungselement 5 über Positionierdorne relativ zur Anschlussfläche 11 sehr genau positionieren. Die Trägerplatte 25 wird vorerst mit der Befestigungsebene 26 gegen die Anschlussfläche 11 angelegt und so relativ zur Anschlussfläche 11 positioniert, dass die ersten Positionierbohrungen 44, 45 koaxial einander gegenüberliegen. Darauf kann ein erster Positionierdorn (nicht dargestellt) in die ersten Positionierbohrungen 44, 45 eingesteckt werden. Danach kann die Trägerplatte 25 um die gemeinsame Bohrungsachse der koaxial einander gegenüberliegen Positionierbohrungen 44, 45 soweit verschwenkt werden, dass auch die zweiten Positionierbohrungen 44, 45 koaxial einander gegenüberliegen. Darauf kann ein zweiter Positionierdorn (nicht dargestellt) in die zweiten Positionierbohrungen 44, 45 eingesteckt werden. Danach erfolgt die Befestigung der Trägerplatte 25 an der Anschlussfläche 11, indem beispielweise die Befestigungsschrauben ausgehend von der Anschlussebene 27 in die Befestigungsbohrungen 41 eingeführt und in das Material des zweiten Bauteiles 2 eingeschraubt werden. Nachdem die Positionslage der Trägerplatte 25 über die Positionierdorne relativ zur Anschlussfläche 11 fixiert werden kann, wird während dem Befestigungsvorgang eine unerwünschte Veränderung der Positionslage, insbesondere ein Verschieben der Trägerplatte 25 wirksam verhindert. Wurde die Trägerplatte 25 beispielweise mittels der Befestigungsschrauben an der Anschlussfläche 11 befestigt, können die Positionierdorne aus den ersten und zweiten Positionierbohrungen 44, 45 wieder entfernt werden. Wie ersichtlich, sind zur Montage des zweiten Verankerungselementes 5 an der Anschlussfläche 11 zusätzliche Werkzeuge, wie eine Wasserwaage und dgl., nicht nötig.

Nach einer vorteilhaften Ausbildung, ist die Trägerplatte 25 an ihren in Fig. 8 eingetragenen Einhängerichtung 48 des zweiten Verankerungselementes 5 unteren Randbereichen des Flansches 46 und Steges 47 mit an der Umgangskontur 29 vorragenden Abweiservorsprünge 49 versehen, welche jeweils eine sich in der Verlängerung der Anschlussebene 27 und in Einhängerichtung 48 verjüngend erstreckende Abweiserflächen 50 ausbilden. Somit schließen die Anschlussebene 27 und Abweiserfläche 50 einen Winkel β (Fig. 6) ein, der zwischen 20° und 45° beträgt. Andererseits ist es aber auch möglich, dass die Trägerplatte 25 ausschließlich an ihrem in Einhängerichtung 48 des zweiten Verankerungselementes 5 unteren Randbereich des Steges 47 einen an der Umgangskontur 29 vorragenden Abweiservorsprung 49 umfasst, welcher eine in der Verlängerung der Anschlussebene 27 und in Einhängerichtung 48 verjüngende Abweiserfläche 50 ausbildet.

Auch kann die Trägerplatte 25 an ihrem in Fig. 8 eingetragenen Einhängerichtung 48 des zweiten Verankerungselementes 5 gegenüber liegenden oberen Randbereich des Flansches 46 mit einer in der Umgangskontur 29 vertieft ausgebildete Ausnehmung 51 zur Positionierung eines in Fig. 4 in strichpunktierte Linien eingetragenen Rückhalteelementes 52 einer Rückhaltevorrichtung umfassen. Diese Ausnehmung 51 wird beidseitig durch Vorsprünge 53 begrenzt, wie in Fig. 4 ersichtlich.

Das Rückhalteelement 52 ist prismenförmig gestaltet und zu dessen Befestigung an der Seitenfläche 10 des ersten Bauteiles 1 von zumindest einer Befestigungsbohrung 54 durchsetzt, welche der Aufnahme von Befestigungsschrauben oder Befestigungsnägel dienen und jeweils eine Senkung für den Schraubenkopf oder Nagelkopf aufweisen. Die Senkung ist in axialer Richtung in der Verlängerung der Befestigungsbohrung 54 vertieft angeordnet. Wie in den Fig. 2 und 4 ersichtlich, kann die Längsachse bzw. Bohrungsachse 55 der Befestigungsbohrung 54 in einer Vertikalebene mit einem Winkel verlaufen, welcher bevorzugt dem Winkel α entspricht.

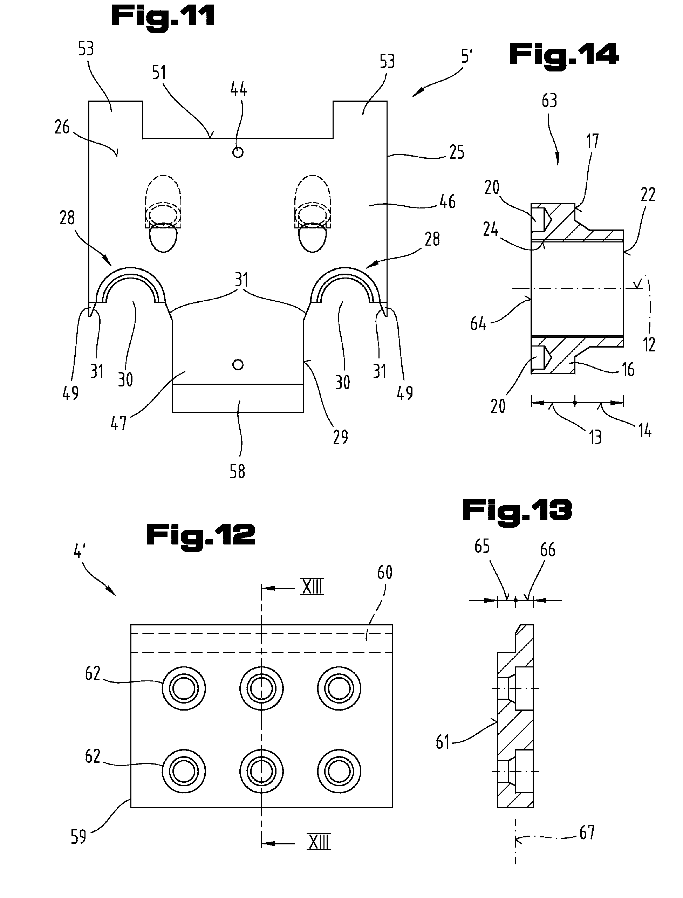

In den Fig. 8 bis 10 wird das Verfahren zur Herstellung der Verbindung eines zweiten Bauteiles 2 am ersten Bauteil 1 durch Einhängen des zweiten Verankerungselementes 5 in das erste Verankerungselement 4 beschrieben. Das Verfahren zur Herstellung der Verbindung zwischen den Bauteilen 1, 2 ist sinngemäß auch auf die Ausführungen in Fig. 11 bis 18 zu übertragen. Diese Verbindung zwischen den Bauteilen 1, 2 bzw. der Formschlusseingriff zwischen den Verankerungselementen 4, 5 kann auch wieder gelöst werden. Die Verbindungherstellung erfolgt an der Baustelle.

Der zweite Bauteil 2 wird mittels eines (nicht dargestellten) Hebezeuges, vorzugsweise einem Kran zwischen die mit Abstand parallel zueinander verlaufenden ersten Bauteile 1 eines Tragwerkes bewegt und auf der Verbindungsbewegung in Einhängerichtung 48 die Verankerungselemente 4, 5 miteinander in Eingriff verbracht, siehe Fig. 8. Die Einhängerichtung 48 verläuft bevorzugt in Wirkrichtung der Schwerkraft. Die ersten Bauteile 1 sind ortsfest und sind mit einer nicht dargestellten Tragstruktur, beispielweise einem Mauerwerk fest verbunden.

Wie aus Fig. 8 ersichtlich, werden die Bauteile 1, 2 bereits werksseitig mit den Verankerungselementen 4, 5 vorgefertigt, sodass auf der Baustelle ausschließlich die Verbindung zwischen den Bauteile 1, 2 zu erfolgen hat, nicht jedoch auch die Montage der Verankerungselemente 4, 5 an den Bauteilen 1, 2. Im Werk können die Verankerungselementen 4, 5 mit höchster Positioniergenauigkeit an den Bauteilen 1, 2 angebracht werden. Einerseits kann die Herstellung der Aufnahme(n) 8 bzw. Aufnahmebohrung(en) im ersten Bauteil 1 vorzugsweise vollautomatisch in einem Bearbeitungszentrum erfolgen. Ein derartiges CNC (Computerized Numerical Control)-Bearbeitungszentrum zeichnet sich durch die hohe Wiederholgenauigkeit und hohe Fertigungsgenauigkeiten aus. Mit anderen Worten, die Aufnahme(n) 8 bzw. Aufnahmebohrung(en) können innerhalb engster Fertigungstoleranzen und auch sehr wirtschaftlich hergestellt werden. Nachdem die Aufnahme(n) 8 bzw. Aufnahmebohrung(en) am ersten Bauteil 1 sehr genau vorgefertigt sind, ist auch eine exakte Positionierung des/der ersten Verankerungselemente(s) 4 an der Seitenfläche 10 möglich.

Andererseits können die zweiten Verankerungselemente 5, welche an den einander gegenüberliegenden Anschlussflächen 11 des zweiten Bauteiles 2 angebracht werden, wie oben beschrieben, mittels der Positionierbohrungen 44, 45 sehr genau positioniert werden.

Wurde nun der zweite Bauteil 2 durch Einhängen des zweiten Verankerungselementes 5 in das erste Verankerungselement 4 mit dem ersten Bauteil 1 verbunden, lastet der zweite Bauteil 2 mit seinem Gewicht an den ersten Verankerungselementen 4 der einander gegenüberliegenden ersten Bauteile 1 auf, wie in Fig. 9, 9a dargestellt. Der zweite Bauteil 2 ist somit in radialer Richtung zu der senkrecht auf die Befestigungsebene 26 ausgerichteten Längsachse 33 der Lagerausnehmung 28 positioniert.

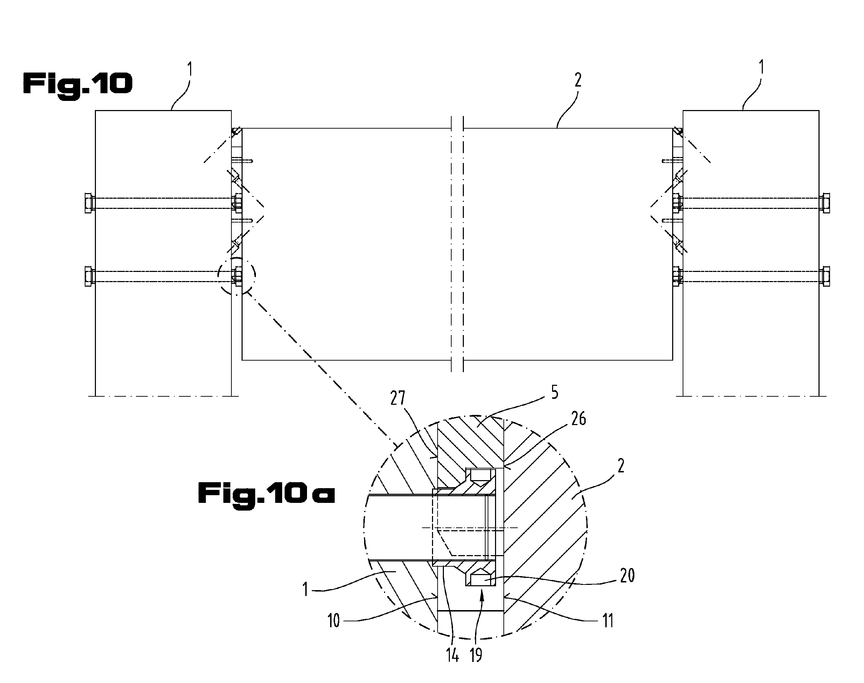

Nach dem Einhängen der Verankerungselemente 4, 5 kann zusätzlich eine Lagepositionierung des zweiten Bauteiles 2 relativ zu den ersten Bauteilen 1 erfolgen. Die Vorrichtung 3 umfasst hierzu zusätzlich zu den Verankerungselementen 4, 5 noch das Stellmittel 19, welches nach einer ersten Ausführung mit dem ersten Verankerungselement 4 (einstückig) ausgebildet wird. Die Lagepositionierung erfolgt derart, dass das erste Verankerungselement 4 mittels des Stellmittels 19 in senkrechter Richtung auf die Stützfläche 36 des zweiten Verankerungselementes 5 axial verstellt wird. Dabei kann das erste Verankerungselement 4 axial soweit verstellt werden, dass dessen Stützabschnitt 13 mit der Stellfläche 17 gegen die Stützfläche 36 anliegt. Auf der Stellbewegung wird das zweite Verankerungselement 5 durch den formschlüssigen Eingriff mit dem ersten Verankerungselement 4 in senkrechter Richtung auf die Befestigungsebene 26 bewegt und dabei der zweite Bauteil 2 in senkrechter Richtung auf die Seitenfläche 10 des ersten Bauteiles 1 positioniert, wie in Fig. 10, 10a dargestellt. Wurde der zweite Bauteil 2 über das erste Verankerungselement 4 auf beschriebene Weise auch in axialer Richtung positioniert, liegt die Trägerplatte 25 mit ihrer Anschlussebene 27 gegen die Seitenfläche 10 des ersten Bauteiles 1 an.

Auch ist es möglich, dass eine Axiallänge 56 (Fig. 7) des Führungsabschnittes 34 vom zweiten Verankerungselement 5 zwischen der Stützfläche 36 und der Anschlussebene 27 kürzer ist als eine Axiallänge 57 (Fig. 7) des Führungsabschnittes 14 des ersten Verankerungselementes 4 zwischen der Stellfläche 17 und der Anlagefläche 22. Wird der Stützabschnitt 13 soweit in axialer Richtung entlang der senkrecht auf die Befestigungsebene 26 verlaufenden Längsachse 33 der Lagerausnehmung 28 verstellt, dass die Stellfläche 17 gegen die Stützfläche 36 aufläuft, so ragt der Führungsabschnitt 14 des ersten Verankerungselementes 4 mit seinem Ende an der Anschlussebene 27 vor. Der Führungsabschnitt 14 wird in die Seitenfläche 10 des ersten Bauteiles 1 eingedrückt und damit eine automatische Sicherung gegen selbsttätiges Lösen der Schraubverbindung zwischen dem ersten Verankerungselement 4 und dem Anschlussabschnitt 9 vermieden.

Wurde der zweite Bauteil 2 über die Verankerungselemente 4, 5 auf beschriebene Weise gegenüber dem ersten Bauteil 1 positioniert, wird die Positionslage des zweiten Bauteiles 2 fixiert, indem je Verankerungselement 5 ein Rückhalteelement 52 mit dem ersten Bauteil 1 verbunden wird. Dabei ist zumindest eine Befestigungsbohrung 54 im Rückhalteelement 52 derart angeordnet, dass diese nach dem Verbinden der Bauteile 1, 2 noch von oben zugänglich ist, wie in Fig. 10 ersichtlich.

In den Fig. 11 bis 15 ist eine andere, nicht vom Schutzumfang umfasste Ausführung der Vorrichtung 3' zum Verbinden von Bauteilen 1, 2 über gegenseitig in Eingriff bringbare Verankerungselemente 4, 5' gezeigt. Dabei ist zumindest ein erstes Verankerungselement 4 am ersten Bauteil 1 und zumindest ein zweites Verankerungselement 5' am zweiten Bauteil 2 befestigt, wie oben beschrieben.

Das erste Verankerungselement 4 zum Eingriff mit dem zweiten Verankerungselement 5' entspricht der obigen Ausführung.

Das zweite Verankerungselement 5' entspricht weitestgehend der obigen Ausführung und unterscheidet sich nur dadurch, dass die Trägerplatte 25 bloß zwei Lagerausnehmungen 28 umfasst.

Nach dieser Ausbildung, ist die Trägerplatte 25 an ihrer in Einhängerichtung 48 des zweiten Verankerungselementes 5' unteren Randbereich, insbesondere des Flansches 46 mit einem Stufenabsatz 58 versehen. Der Stufenabsatz 58 kann auf einer in den Fig. 12 und 13 gezeigten Stützleiste 59 ruhen.

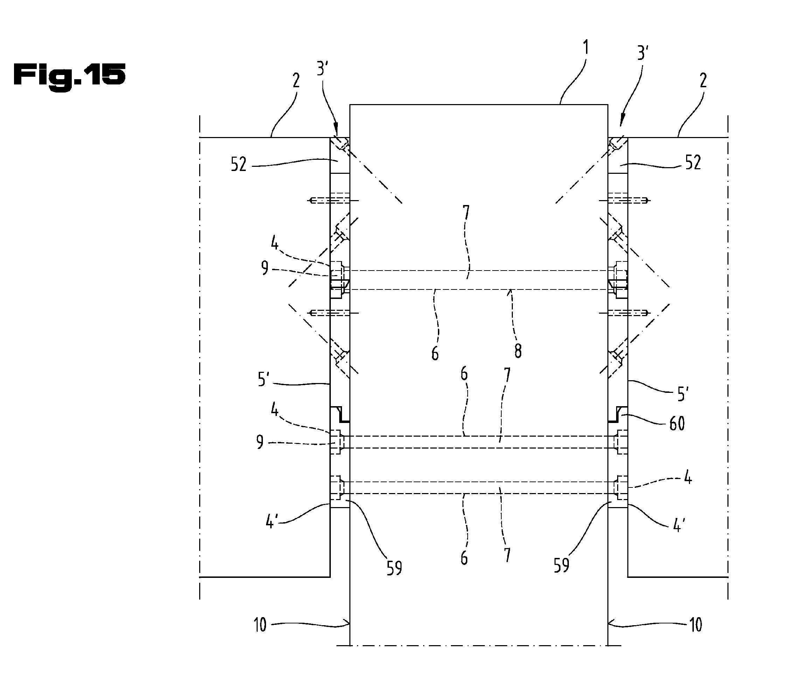

Die prismatische Stützleiste 59 bildet in diesem Fall ein erstes Verankerungselement 4' und umfasst auf einer dem zweiten Verankerungselement 5' zugewandten Seite einen komplementär zum Stufenabsatz 58 des erstes Verankerungselementes 4' ausgebildeten Stützabschnitt 60 bzw. Stützsockel. Die Stützleiste 59 bildet eine dem ersten Bauteil 1 zugewandte Befestigungsebene 61 aus, mit welcher die Stützleiste 59 nach deren Befestigung an der Seitenfläche 10 anliegt. Ferner umfasst die Stützleiste 59 zu dessen Befestigung an der Seitenfläche 10 des ersten Bauteiles 1 senkrecht auf die Befestigungsebene 61 verlaufende und diese durchsetzende Befestigungsbohrungen 62, welche der Aufnahme von in Fig. 14 gezeigten Befestigungselementen 63 dienen. Das Befestigungselement 63 entspricht grundsätzlich dem in Fig. 3 gezeigten Verankerungselement 4 mit dem Unterschied, dass die Bohrungen 20 in einer parallel zur Stellfläche 17 verlaufenden Stirnfläche 64 mit gegenseitigem Abstand entlang einem Hüllkreis vertieft angeordnet sind. Die Befestigungsbohrungen 62 sind in einer Horizontalen nebeneinander und/oder in einer Vertikalen untereinander vorgesehen. Nach gezeigter Ausführung sind die Befestigungsbohrungen 62 rasterartig nebeneinander und übereinander angeordnet. Das zweite Verankerungselement 5' lastet über den Stufenabsatz 58 auf dem Stützsockel 60 auf, wie in Fig. 15 ersichtlich.

Der erste Bauteil 1 ist mit den oben beschriebenen Anschlusselementen 6 versehen, welche über die Ankerabschnitte 7 in Aufnahmen 8 im ersten Bauteil 1 verankert sind und mit den Anschlussabschnitten 9 an der dem zweiten Bauteil 2 zugewandten Seitenfläche 10 vorragt. Das erste Verankerungselement 4' kann mit dem Anschlussabschnitt 9 verbunden werden.

Die Befestigungsbohrung 62 kann koaxial einander gegenüberliegende und sich in Richtung einer senkrecht auf die Befestigungsebene 61 ausgerichteten Längsachse axial erstreckende Führungsabschnitte 65, 66 sowie eine im Wesentlichen parallel zur Befestigungsebene 61 verlaufende Stützfläche 67 zur Anlage der Stellfläche 17 des Stützabschnittes 13 umfassen.

Der erste Führungsabschnitt 65 umfasst eine in axialer Richtung senkrecht auf die Befestigungsebene 61 verlaufende erste Führungsbohrung mit einer zylindrischen ersten Führungsfläche. Zusätzlich kann der erste Führungsabschnitt 65 eine sich ausgehend von der Stützfläche 67 in Richtung der zylindrischen Führungsbohrung konisch verjüngende Auflauffläche ausbilden. Genauso gut kann der erste Führungsabschnitt 65 auch nur die zylindrische Führungsfläche oder die konische Auflauffläche umfassen. Die Ausbildung der konischen Auflauffläche ist von Vorteil, da mit ihr eine Führungs- bzw. Zentrierfunktion zwischen den Befestigungselementen 63 und der Stützleiste 59 in axialer und radialer Richtung senkrecht auf die Befestigungsebene 61 ermöglicht wird.

Der zweite Führungsabschnitt 66 umfasst eine in axialer Richtung senkrecht auf die Befestigungsebene 61 verlaufende zweite Führungsbohrung mit einer zylindrischen Führungsfläche. Die zweite Führungsfläche verläuft koaxial zur ersten Führungsfläche. Der Durchmesser der zweiten Führungsbohrung ist größer als der Durchmesser der ersten Führungsbohrung, sodass zwischen ihnen eine Abstufung entsteht und sich die Stützfläche 67 in radialer Richtung zwischen den zylindrischen Führungsflächen der Führungsbohrungen erstreckt.

Wie in Fig. 15 ersichtlich, kann nun das zweite Verankerungselement 5' einerseits an zumindest einem Verankerungselement 4, wie in den Fig. 2 bis 7 beschrieben, und andererseits mit zumindest einem Verankerungselement 4', wie in den Fig. 12 bis 14 beschrieben, formschlüssig eingehängt werden. Das Verankerungselement 4' wird ebenso wiederum im Werk vormontiert, wie oben beschrieben. Gemäß dieser Ausführung kann eine nachträgliche Lagepositionierung des zweiten Bauteiles 2 relativ zu den ersten Bauteilen 1 über die ersten Verankerungselemente 4 erfolgen. Das Verankerungselement 4' dient ausschließlich der Lastabstützung und ist es somit nicht erforderlich, dass auch das Verankerungselement 4' eine nachträgliche Lagepositionierung des zweiten Bauteiles 2 relativ zu den ersten Bauteilen 1 erlaubt.

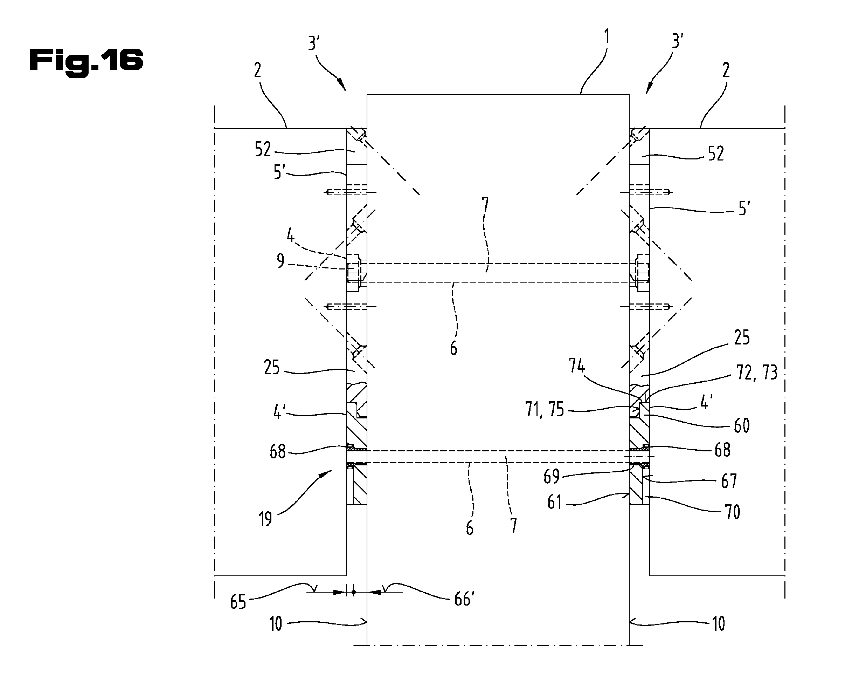

Gemäß Fig. 16 ist im Gegensatz zur Ausführung in Fig. 15 über das erste Verankerungselement 4' auch eine nachträgliche Lagepositionierung des zweiten Bauteiles 2 relativ zu den ersten Bauteilen 1 möglich. Die Vorrichtung 3' umfasst hierzu zusätzlich zu den Verankerungselementen 4, 5 noch das Stellmittel 19, welches nach dieser Ausführung nicht einstückig mit dem Verankerungselement 4', sondern von diesem getrennt durch zumindest ein Befestigungselement 68 ausgebildet wird.

Das erste Verankerungselement 4' entspricht grundsätzlich der oben beschriebenen prismatischen Stützleiste 59 mit dem Unterschied, dass nur eine Reihe von speziell gestalteten Befestigungsbohrungen 69 vorgesehen ist, welche der Aufnahme von Befestigungselementen 68 dienen. Das Befestigungselement 68 ist entsprechend dem in Fig. 3 gezeigten Verankerungselement 4 ausgebildet.

Die Befestigungsbohrung 69 kann koaxial einander gegenüberliegende und sich in Richtung einer senkrecht auf die Befestigungsebene 61 ausgerichteten Längsachse axial erstreckende Führungsabschnitte 65, 66' sowie eine im Wesentlichen parallel zur Befestigungsebene 61 verlaufende Stützfläche 67 zur Anlage der Stellfläche 17 des Stützabschnittes 13 umfassen.

Der Führungsabschnitt 66' umfasst eine in axialer Richtung senkrecht auf die Befestigungsebene 61 verlaufende zweite Führungsbohrung mit einer zylindrischen Führungsfläche, wobei in die Führungsbohrung in radialer Richtung ein Zugangskanal 70 mündet, mittels dem die Bohrungen 20 des Stellmittels 19 zugänglich sind.

Ferner umfasst das erste Verankerungselement 4' den Stützabschnitt 60, welcher eine parallel zur Anschlussebene 61 verlaufende Stellfläche 71 und/oder eine an der Stellfläche 71 vorspringende ebene Lagerfläche 72 umfasst. Die Stellfläche 71 verläuft bevorzugt senkrecht zur Längsachse des Befestigungselementes 68.

Das zweite Verankerungselement 5' umfasst wiederum die oben beschriebene Trägerplatte 25, welche in einem in Einhängerichtung 48 betrachtet unteren Randbereich zumindest eine Lagerausnehmung 73 zur bereichsweisen Aufnahme des ersten Verankerungselementes 4' aufweist.

Die Lagerausnehmung 73 umfasst einen an der Umfangskontur 29 der Trägerplatte 25 eine Einführöffnung 74 ausbildenden Eingangsabschnitt und einen fensterartigen Lagerabschnitt.

Der Lagerabschnitt bildet eine im Wesentlichen parallel zur Befestigungsebene 26 verlaufende Stützfläche 75 zur Anlage der Stellfläche 71 des Stützabschnittes 60 aus.

Die Lastabstützung des zweiten Bauteiles 2 am ersten Verankerungselement 4' kann wiederum über das Verankerungselement 5' erfolgen, indem der Stufenabsatz 58 auf dem Stützabschnitt 60 bzw. Stützsockel auflastet.

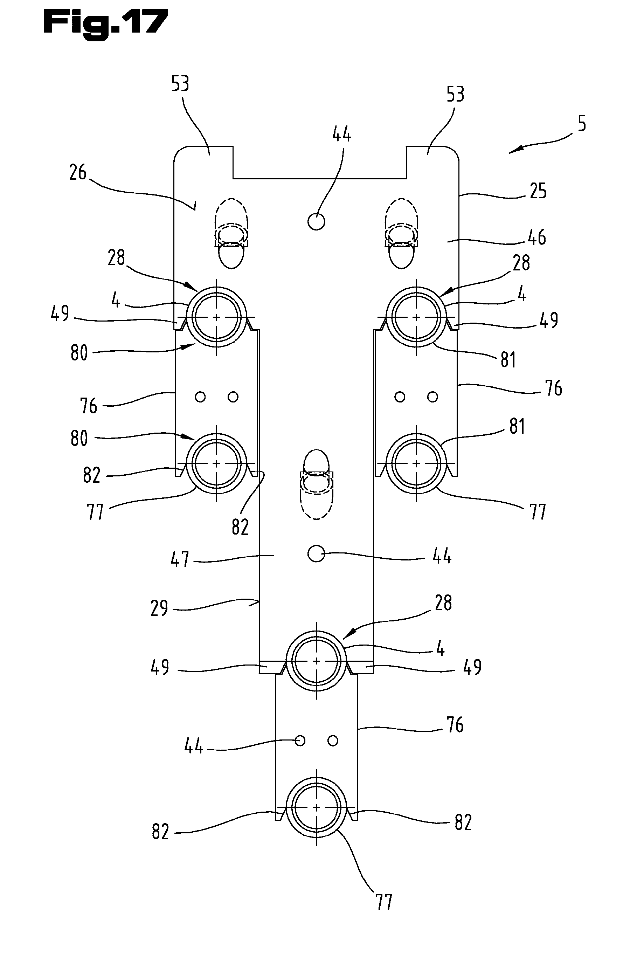

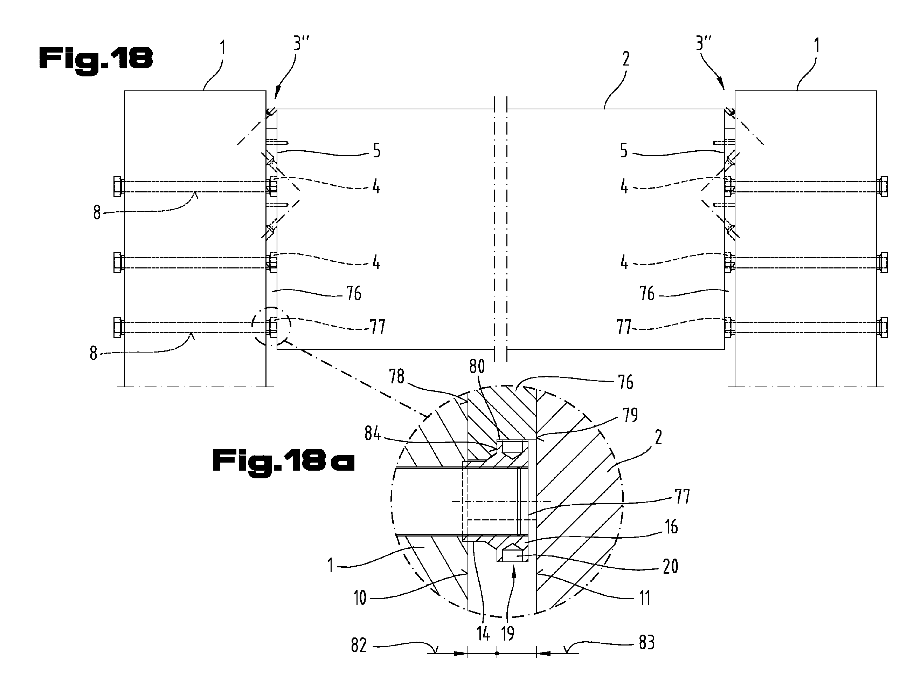

Fig. 17 und 18 zeigen eine Vorrichtung 3" zum Verbinden von Bauteilen 1, 2 über gegenseitig in Eingriff bringbare Verankerungselemente 4, 5 gezeigt. Dabei ist zumindest ein erstes Verankerungselement 4 am ersten Bauteil 1 und zumindest ein zweites Verankerungselement 5 am zweiten Bauteil 2 befestigt. Die Verankerungselemente 4, 5 sind gemäß obigen Ausführung ausgebildet, sodass auf eine nähere Erläuterung an dieser Stelle verzichtet wird.

Wie ersichtlich, ist das zweite Verankerungselement 5 über die ersten Verankerungselemente 4 an Stützleisten 76 gelagert. Die Anzahl der Stützleisten 76 entspricht der Anzahl an ersten Verankerungselementen 4.

Die Stützleiste 76 ist über zumindest ein drittes Verankerungselement 77 und zumindest ein erstes Verankerungselement 4 am ersten Bauteil 1 befestigbar. Das dritte Verankerungselement 77 ist dabei entsprechend dem ersten Verankerungselement 4 ausgebildet, sodass auf eine nähere Erläuterung an dieser Stelle verzichtet wird.

Die Stützleiste 76 umfasst eine gegen den ersten Bauteil 1 anlegbare Befestigungsebene 78. Gegebenenfalls kann die Stützleiste 76 auch eine zur Befestigungsebene 78 zumindest abschnittsweise parallel verlaufende Anschlussebene 79 ausbilden. An der Stützleiste 76 ist in einander gegenüberliegenden Endbereichen jeweils zumindest eine Lagerausnehmung 80 zur Aufnahme des ersten Verankerungselementes 4 und dritten Verankerungselementes 77 vorgesehen, wie in Fig. 17 ersichtlich.

Die Lagerausnehmung 80 umfasst einen, an einer Umfangskontur der Stützleiste 76 eine Einführöffnung 81 ausbildenden Eingangsabschnitt und einen an diesen anschließenden Lagerabschnitt. Sohin entspricht die Lagerausnehmung 80 der oben beschriebenen Lagerausnehmung 28. Die Einführöffnung 81 ist durch sich von der Umfangskontur der Stützleiste 76 in Richtung des Lagerabschnittes erstreckende und geneigt aufeinander zulaufende Einführschrägen 82 bzw. Schrägflächen begrenzt. Demnach ist der Eingangsabschnitt V-förmig gestaltet. Sohin entspricht die Einführöffnung 81 der oben beschriebenen Einführöffnung 30, sodass auf eine nähere Erläuterung an dieser Stelle verzichtet wird.

Der Lagerabschnitt kann einander koaxial gegenüberliegende und sich in Richtung einer senkrecht auf die Befestigungsebene 78 ausgerichteten Längsachse axial erstreckende Führungsabschnitte 82, 83 sowie eine im Wesentlichen parallel zur Befestigungsebene 78 verlaufenden Stützfläche 84 zur Anlage der Stellfläche 17 des Stützabschnittes 13 umfassen.

Die Führungsabschnitte 82, 83 und Stützfläche 84 entsprechen den oben beschriebenen Führungsabschnitten 34, 35 bzw. der Stützfläche 36, sodass auf eine nähere Erläuterung an dieser Stelle verzichtet wird.

Nach dem Einhängen der Stützleiste 76 mit ihrem oberen Lagerabschnitt am ersten Verankerungselementes 4 und mit ihrem unteren Lagerabschnitt am dritten Verankerungselement 77 ragt zumindest der Kragen 16 des dritten Verankerungselementes 77 soweit aus der (halbkreisförmigen) Führungsausnehmung heraus, dass ein Umfangsabschnitt des Kragens 16 an der Einführöffnung 81 bzw. am Eingangsabschnitt freiliegt und zumindest eine der Bohrungen 20 über die Einführöffnung 81 bzw. den Eingangsabschnitt mit einem Werkzeug, beispielweise einem Spannschlüssel oder Spanndorn zugänglich ist. Das Werkzeug kann in die Bohrung 20 formschlüssig eingreifen, wie in Fig. 18a ersichtlich.

Wie in Fig. 17 eingetragen, kann die Stützleiste 76 senkrecht zur Befestigungsebene 78 verlaufende und sich durch die Stützleiste 76 hindurch erstreckende Positionierbohrungen 44 umfassen, welche eine einfachere Positionierung bzw. Befestigung der Stützleiste 76 am ersten Bauteil 1 erlauben, wie oben ausführlich beschrieben.

Abschließend sei auch noch darauf hingewiesen, dass eine Verringerung der Flächenpressung in den Aufnahmebohrungen für die Anschlusselemente 6, insbesondere die Gewindestangen erreicht wird, wenn auf den Gewindestangen zusätzlich eine Hülse aufgebracht wird. Andererseits können höhere Zugkräfte und Druckkräfte quer durch den ersten Bauteil 1 (Hauptträger) geleitet werden.

Mit der beschriebenen Vorrichtung 3; 3'; 3" können die Bauteil2 1, 2 auch in verschiedenen Winkeln, insbesondere zwischen 45° und 90° zueinander ausgerichtet und miteinander verspannt werden.

Die Ausführungsbeispiele zeigen mögliche Ausführungsvarianten der Vorrichtung 3; 3', 3".

Der Ordnung halber sei abschließend darauf hingewiesen, dass zum besseren Verständnis des Aufbaus der Vorrichtung diese bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Bauteil | 36 | Stützfläche |
| 2 | Bauteil | 37 | Führungsfläche |
| 3 | Vorrichtung | 38 | Auflauffläche |
| 4 | Verankerungselement | 39 | Führungsfläche |
| 5 | Verankerungselement | 40 | Befestigungsmittel |
| | | | |
| 6 | Anschlusselement | 41 | Befestigungsbohrung |
| 7 | Ankerabschnitt | 42 | Senkung |
| 8 | Aufnahme | 43 | Bohrungsachse |
| 9 | Anschlussabschnitt | 44 | Positionierbohrung |
| 10 | Seitenfläche | 45 | Positionierbohrung |
| | | | |
| 11 | Anschlussfläche | 46 | Flansch |
| 12 | Längsachse | 47 | Steg |
| 13 | Stützabschnitt | 48 | Einhängerichtung |
| 14 | Führungsabschnitt | 49 | Abweiservorsprung |
| 15 | | 50 | Abweiserfläche |
| | | | |
| 16 | Kragen | 51 | Ausnehmung |
| 17 | Stellfläche | 52 | Rückhalteelement |
| 18 | Führungsfläche | 53 | Vorsprung |
| 19 | Stellmittel | 54 | Befestigungsbohrung |
| 20 | Bohrung | 55 | Bohrungsachse |
| | | | |
| 21 | Auflauffläche | 56 | Axiallänge |
| 22 | Anlagefläche | 57 | Axiallänge |
| 23 | Führungsfläche | 58 | Stufenabsatz |
| 24 | Anschlussabschnitt | 59 | Stützleiste |
| 25 | Trägerplatte | 60 | Stützabschnitt |
| | | | |
| 26 | Befestigungsebene | 61 | Befestigungsebene |
| 27 | Anschlussebene | 62 | Befestigungsbohrung |
| 28 | Lagerausnehmung | 63 | Befestigungselement |
| 29 | Umfangskontur | 64 | Stirnfläche |
| 30 | Einführöffnung | 65 | Führungsabschnitt |
| | | | |
| 31 | Einführschräge | 66 | Führungsabschnitt |
| 32 | Durchmesser | 67 | Stützfläche |
| 33 | Längsachse | 68 | Befestigungselement |
| 34 | Führungsabschnitt | 69 | Befestigungsbohrung |
| 35 | Führungsabschnitt | 70 | Zugangskanal |
| 71 | Stellfläche | | |
| 72 | Lagerfläche | | |
| 73 | Lagerausnehmung | | |
| 74 | Einführöffnung | | |
| 75 | Stützfläche | | |
| | | | |
| 76 | Stützleiste | | |
| 77 | Verankerungselement | | |
| 78 | Befestigungsebene | | |
| 79 | Anschlussebene | | |
| 80 | Lagerausnehmung | | |
| | | | |
| 81 | Einführöffnung | | |
| 82 | Führungsabschnitt | | |
| 83 | Führungsabschnitt | | |
| 84 | Stützfläche | | |

## Patentansprüche

1. Vorrichtung (3; 3") zum Verbinden von ersten und zweiten Bauteilen (1, 2) über gegenseitig in Eingriff bringbare Verankerungselemente (4, 5), mit zumindest einem an zumindest einer Seitenfläche (10) des ersten Bauteils (1) befestigbaren ersten Verankerungselement (4) und einem an einer Anschlussfläche (11) des zweiten Bauteils (2) befestigbaren zweiten Verankerungselement (5), wobei das erste Verankerungselement (4) in Richtung einer Längsachse (12) einen Stützabschnitt (13) und einen koaxial zu diesem angeordneten und sich axial erstreckenden Führungsabschnitt (14) umfasst, wobei der Stützabschnitt (13) einen in radialer Richtung zum Führungsabschnitt (14) vorragenden Kragen (16) ausbildet, und das zweite Verankerungselement (5) eine Trägerplatte (25) mit einer der Anschlussfläche (11) des zweiten Bauteils (2) zugewandten Befestigungsebene (26) und einer zu dieser zumindest abschnittsweise parallel verlaufenden und der Seitenfläche (10) des ersten Bauteils (1) zugewandten Anschlussebene (27) sowie zumindest eine an der Trägerplatte (25) vorgesehene Lagerausnehmung (28) zur bereichsweisen Aufnahme des ersten Verankerungselementes (4) aufweist, welche Lagerausnehmung (28) einen an einer Umfangskontur (29) der Trägerplatte (25) eine Einführöffnung (30) ausbildenden Eingangsabschnitt und einen Lagerabschnitt mit einer im Wesentlichen parallel zur Befestigungsebene (26) verlaufenden Stützfläche (36) zur Anlage des Stützabschnittes (13) umfasst, und sich die zumindest eine Lagerausnehmung (28) in einer in senkrechter Richtung auf die Befestigungsebene (26) ausgerichteten Längsachse (33) von der Befestigungsebene (26) bis zu der Anschlussebene (27) erstreckt, und wobei die Längsachse (12) des ersten Verankerungselements (4) und die Längsachse (33) der Lagerausnehmung (28) parallel zueinander verlaufen, wobei die Vorrichtung (3; 3") ferner zumindest ein am ersten Verankerungselement (4) ausgebildetes Stellmittel (19) umfasst, mittels welchem nach dem Verbinden der ersten und zweiten Bauteile (1, 2) über die gegenseitig in Eingriff gebrachten Verankerungselemente (4, 5) das erste Verankerungselement (4) durch Drehen um dessen Längsachse in senkrechter Richtung auf die Stützfläche (36) des zweiten Verankerungselementes (5) bewegbar ist, wobei das Stellmittel (19) durch im Kragen (16) diametral gegenüberliegend angeordnete Bohrungen (20) gebildet ist.

2. Vorrichtung nach Anspruch 1, **dadurch gekennzeichnet, dass** der Führungsabschnitt (14) eine koaxial zum Stützabschnitt (13) und in axialer Richtung verlaufende zylindrische Führungsfläche (23) ausbildet.

3. Vorrichtung nach Anspruch 1 oder 2, **dadurch gekennzeichnet, dass** der Führungsabschnitt (14) eine sich ausgehend vom Stützabschnitt (13) konisch verjüngende Auflauffläche (21) ausbildet.

4. Vorrichtung nach einem der Ansprüche 1 bis 3, **dadurch gekennzeichnet, dass** der Kragen (16) eine senkrecht auf die Längsachse (12) des ersten Verankerungselementes (4) ausgerichtete Stellfläche (17) ausbildet.

5. Vorrichtung nach einem der Ansprüche 1 bis 4, **dadurch gekennzeichnet, dass** das erste Verankerungselement (4) eine sich durch den Stützabschnitt (13) und den Führungsabschnitt (14) axial erstreckende Gewindebohrung (24) umfasst.

6. Vorrichtung nach einem der Ansprüche 1 bis 5, **dadurch gekennzeichnet, dass** der Lagerabschnitt der Lagerausnehmung (28) zusätzlich einen an die Stützfläche (36) in einer ersten axialen Richtung senkrecht auf die Befestigungsebene (26) anschließenden ersten Führungsabschnitt (34) umfasst.

7. Vorrichtung nach Anspruch 6, **dadurch gekennzeichnet, dass** der erste Führungsabschnitt (34) eine sich ausgehend von der Stützfläche (36) konisch verjüngende Auflauffläche (38) ausbildet.

8. Vorrichtung nach Anspruch 6 oder 7, **dadurch gekennzeichnet, dass** der erste Führungsabschnitt (34) eine in einer ersten axialen Richtung senkrecht auf die Befestigungsebene (26) verlaufende zylindrische Führungsfläche (37) umfasst.

9. Vorrichtung nach einem der Ansprüche 1 bis 6, **dadurch gekennzeichnet, dass** der Lagerabschnitt der Lagerausnehmung (28) zusätzlich einen an die Stützfläche (36) in einer zweiten axialen Richtung senkrecht auf die Befestigungsebene (26) anschließenden zweiten Führungsabschnitt (35) umfasst, wobei der erste Führungsabschnitt (34) und zweite Führungsabschnitt (35) koaxial angeordnet sind.

10. Vorrichtung nach Anspruch 9, **dadurch gekennzeichnet, dass** der zweite Führungsabschnitt (35) eine in einer zweiten axialen Richtung senkrecht auf die Befestigungsebene (26) verlaufende zylindrische Führungsfläche (39) umfasst.

11. Vorrichtung nach Anspruch 1, **dadurch gekennzeichnet, dass** die Trägerplatte (25) zumindest an ihrem in Einhängerichtung (48) des zweiten Verankerungselementes (5) unteren Randbereich wenigstens einen an der Umfangskontur (29) vorragenden Abweiservorsprung (49) umfasst, welcher eine in der Verlängerung der die Trägerplatte (25) parallel zur Befestigungsebene (26) ausbildenden Anschlussebene (27) in Einhängerichtung (48) verjüngend verlaufende Abweiserfläche (50) ausbildet.

12. Vorrichtung nach Anspruch 1, **dadurch gekennzeichnet, dass** die Trägerplatte (25) an ihrem in Einhängerichtung (49) des zweiten Verankerungselementes (5) gegenüber liegenden oberen Randbereich zwischen Vorsprüngen (53) eine Ausnehmung (51) zur Positionierung eines Rückhalteelementes (52) umfasst.

13. Vorrichtung nach Anspruch 1 oder 12, **dadurch gekennzeichnet, dass** die Vorrichtung (3; 3") ferner eine Rückhaltevorrichtung umfasst, welche ein Rückhalteelement (52) zum Fixieren des zweiten Bauteiles (2) am ersten Bauteil (1) nach dem gegenseitigen Eingriff der Verankerungselemente (4, 5) umfasst.

14. Vorrichtung nach Anspruch 1, **dadurch gekennzeichnet, dass** die Trägerplatte (25) senkrecht zur Befestigungsebene (26) verlaufende und sich durch die Trägerplatte (25) hindurch erstreckende Positionierbohrungen (44) umfasst.

15. Vorrichtung nach einem der Ansprüche 1 bis 14, **dadurch gekennzeichnet, dass** das zweite Verankerungselement (5) und/oder das erste Verankerungselement (4) an einer Stützleiste (76) abstützbar sind, wobei die Stützleiste (76) über zumindest ein drittes Verankerungselement (77) am ersten Bauteil (1) befestigbar ist.

16. Vorrichtung nach Anspruch 15, **dadurch gekennzeichnet, dass** die Stützleiste (76) an ihrem ersten Endbereich zumindest eine erste Lagerausnehmung (80) zur bereichsweisen Aufnahme des ersten Verankerungselementes (4) und ihrem zweiten Endbereich zumindest eine dritte Lagerausnehmung (80) zur bereichsweisen Aufnahme des dritten Verankerungselementes (77) aufweist, welche Lagerausnehmungen (80) jeweils einen an einer Umfangskontur der Stützleiste (76) eine Einführöffnung (81) ausbildenden Eingangsabschnitt und einen Lagerabschnitt mit einer im Wesentlichen parallel zu einer dem ersten Bauteil (1) zugewandten Befestigungsebene (78) verlaufenden Stützfläche (84) zur Anlage des Stützabschnittes (13) des jeweiligen Verankerungselementes (4, 77) umfasst.

17. Vorrichtung nach Anspruch 15 oder 16, **dadurch gekennzeichnet, dass** das dritte Verankerungselement (77) entsprechend dem ersten Verankerungselement (4) ausgebildet ist.

18. Vorrichtung nach Anspruch 15 oder 16, **dadurch gekennzeichnet, dass** die dritte Lagerausnehmung (80) entsprechend der ersten Lagerausnehmung (28) ausgebildet ist.

19. Verfahren zum Verbinden von ersten und zweiten Bauteilen (1, 2) über gegenseitig in Eingriff bringbare Verankerungselemente (4, 5), mit zumindest einem ersten Verankerungselement (4) an zumindest einer Seitenfläche (10) des ersten Bauteils (1) und einem zweiten Verankerungselement (5) an einer Anschlussfläche (11) des zweiten Bauteils (2), wobei das erste Verankerungselement (4) in Richtung einer Längsachse (12) einen Stützabschnitt (13) und einen koaxial zu diesem angeordneten und sich axial erstreckenden Führungsabschnitt (14) umfasst, wobei durch den Stützabschnitt (13) ein in radialer Richtung zum Führungsabschnitt (14) vorragender Kragen (16) ausgebildet wird, und das zweite Verankerungselement (5) eine Trägerplatte (25) mit einer der Anschlussfläche (11) des zweiten Bauteils (2) zugewandten Befestigungsebene (26) und einer zu dieser zumindest abschnittsweise parallel verlaufenden und der Seitenfläche (10) des ersten Bauteils (1) zugewandten Anschlussebene (27) sowie zumindest eine an der Trägerplatte (25) vorgesehene Lagerausnehmung (28) zur Aufnahme des ersten Verankerungselementes (4) aufweist, welche Lagerausnehmung (28) einen Lagerabschnitt mit einer im Wesentlichen parallel zur Befestigungsebene (26) verlaufenden Stützfläche (36) zur Anlage des Stützabschnittes (13) umfasst, und sich die zumindest eine Lagerausnehmung (28) in einer in senkrechter Richtung auf die Befestigungsebene (26) ausgerichteten Längsachse (33) durchgehend zwischen der Befestigungsebene (26) und der Anschlussebene (27) erstreckt, und wobei die Längsachse (12) des ersten Verankerungselements (4) und die Längsachse (33) der Lagerausnehmung (28) parallel zueinander verlaufen, bei dem der zweite Bauteil (2) durch Einhängen des zweiten Verankerungselementes (5) in das erste Verankerungselement (4) mit dem ersten Bauteil (1) verbunden wird, wobei nach dem Einhängen der Verankerungselemente (4, 5) zur Lagepositionierung des zweiten Bauteiles (2) relativ zum ersten Bauteil (1) das erste Verankerungselement (4) mittels eines am ersten Verankerungselement (4) ausgebildeten Stellmittels (19) in senkrechter Richtung auf die Stützfläche (36) des zweiten Verankerungselementes (5) verstellt wird, **dadurch gekennzeichnet, dass** sich bei in Eingriff gebrachten ersten und zweiten Verankerungselementen (4, 5) die Trägerplatte (25) zwischen der Seitenfläche (10) des ersten Bauteils (1) und der Anschlussfläche (11) des zweiten Bauteils (2) befindet und dass sich der Kragen (16) des ersten Verankerungselementes (4) zwischen der Befestigungsebene (26) und der Anschlussebene (27) der Trägerplatte (25) befindet und dass das Stellmittel (19) durch im Kragen (16) diametral gegenüberliegend angeordnete Bohrungen (20) gebildet wird.

20. Verfahren nach Anspruch 19, **dadurch gekennzeichnet, dass** nach der Lagepositionierung des zweiten Bauteiles (2) relativ zum ersten Bauteil (1) ein Rückhalteelement (52) mit dem ersten Bauteil (1) verbunden und dabei mit dem Rückhalteelement (52) die Positionslage des zweiten Bauteiles (2) fixiert wird.

## Claims

1. A device (3; 3") for connecting first and second components (1, 2) by means of anchoring elements (4, 5) that can be mutually engaged, with at least one first anchoring element (4) that can be fastened on at least one lateral surface (10) of the first component (1) and one second anchoring element (5) that can be fastened on a connecting surface (11) of the second component (2), wherein the first anchoring element (4) comprises in the direction of a longitudinal axis (12) a support section (13) and an axially extending guide section (14) arranged coaxial thereto, wherein the support section (13) forms a collar (16) that protrudes the guide section (14) in the radial direction, and the second anchoring element (5) features a carrier plate (25) with a fastening plane (26) that faces the connecting surface (11) of the second component (2) and a connecting plane (27) that at least sectionally extends parallel to the fastening plane (26) and faces the lateral surface (10) of the first component (1), as well as at least one bearing recess (28) on the carrier plate (25) for sectionally receiving the first anchoring element (4), wherein said bearing recess (28) comprises an inlet section that forms an insertion opening (30) on a circumferential contour (29) of the carrier plate (25) and a bearing section with a support surface (36) that extends essentially parallel to the fastening plane (26) and serves for contacting the support section (13), and the at least one bearing recess (28) extends from the fastening plane (26) up to the connecting plane (27) in a longitudinal axis (33) aligned perpendicular to the fastening plane (26), wherein the longitudinal axis (12) of the first anchoring element (4) and the longitudinal axis (33) of the bearing recess (28) extend parallel to one another, and wherein the device (3; 3") furthermore comprises at least one adjusting means (19) that is realized on the first anchoring element (4) and makes it possible to perpendicularly move the first anchoring element (4) onto the support surface (36) of the second anchoring element (5) by turning the first anchoring element (4) about its longitudinal axis after the first and second components (1,2) have been connected to one another by means of the mutually engaged anchoring elements (4, 5),
wherein
the adjusting means (19) are realized in the form of bores (20) that are arranged in the collar (16) diametrically opposite of one another.

2. The device according to claim 1, **characterized in that** the guide section (14) forms a cylindrical guide surface (23) that extends coaxial to the support section (13) and in the axial direction.

3. The device according to claim 1 or 2, **characterized in that** the guide section (14) forms a ramp surface (21) that is conically tapered starting from the support section (13).

4. The device according to one of claims 1 to 3, **characterized in that** the collar (16) forms an adjusting surface (17) that is aligned perpendicular to the longitudinal axis (12) of the first anchoring element (4).

5. The device according to one of claims 1 to 4, **characterized in that** the first anchoring element (4) comprises a threaded bore (24) that axially extends through the support section (13) and the guide section (14).

6. The device according to one of claims 1 to 5, **characterized in that** the bearing section of the bearing recess (28) additionally comprises a first guide section (34) that adjoins the support surface (36) in a first axial direction extending perpendicular to the fastening plane (26).

7. The device according to claim 6, **characterized in that** the first guide section (34) forms a ramp surface (38) that is conically tapered starting from the support surface (36).

8. The device according to claim 6 or 7, **characterized in that** the first guide section (34) comprises a cylindrical guide surface (37) that extends in a first axial direction perpendicular to the fastening plane (26).

9. The device according to one of claims 1 to 6, **characterized in that** the bearing section of the bearing recess (28) additionally comprises a second guide section (35) that adjoins the support surface (36) in a second axial direction extending perpendicular to the fastening plane (26), wherein the first guide section (34) and the second guide section (35) are arranged coaxial.

10. The device according to claim 9, **characterized in that** the second guide section (35) comprises a cylindrical guide surface (39) that extends in a second axial direction perpendicular to the fastening plane (26).

11. The device according to claim 1, **characterized in that** the carrier plate (25) comprises at least one deflector projection (49) protruding on the circumferential contour (29) on its lower edge region referred to the engaging direction (48) of the second anchoring element (5), wherein said deflector projection forms a deflector surface (50) that in the engaging direction (48) extends conically in the extension of the connecting plane (27) that forms the carrier plate (25) parallel to the fastening plane (26).

12. The device according to claim 1, **characterized in that** the carrier plate (25) comprises between projections (53) a recess (51) for positioning a retaining element (52) on its opposite upper edge region referred to the engaging direction (49) of the second anchoring element (5).

13. The device according to claim 1 or 12, **characterized in that** the device (3; 3") furthermore comprises a retaining device that comprises a retaining element (52) for fixing the second component (2) on the first component (1) after the mutual engagement of the anchoring elements (4, 5).

14. The device according to claim 1, **characterized in that** the carrier plate (25) comprises positioning bores (44) that extend perpendicular to the fastening plane (26) and through the carrier plate (25).

15. The device according to one of claims 1 to 14, **characterized in that** the second anchoring element (5) and/or the first anchoring element (4) can be supported on a support strip (76), wherein the support strip (76) can be fastened on the first component (1) by means of at least one third anchoring element (77).

16. The device according to claim 15, **characterized in that** the support strip (76) features on its first end region at least one first bearing recess (80) for sectionally receiving the first anchoring element (4) and on its second end region at least one third bearing recess (80) for sectionally receiving the third anchoring element (77), wherein said bearing recesses (80) respectively comprise an inlet section that forms an insertion opening (81) on a circumferential contour of the support strip (76) and a bearing section with a support surface (84) that extends essentially parallel to a fastening plane (78) facing the first component (1) and serves for contacting the support section (13) of the respective anchoring element (4, 77).

17. The device according to claim 15 or 16, **characterized in that** the third anchoring element (77) is realized corresponding to the first anchoring element (4).

18. The device according to claim 15 or 16, **characterized in that** the third bearing recess (80) is realized corresponding to the first bearing recess (28).

19. A method for connecting first and second components (1, 2) by means of anchoring elements (4, 5) that can be mutually engaged, with at least one first anchoring element (4) on at least one lateral surface (10) of the first component (1) and one second anchoring element (5) on a connecting surface (11) of the second component (2), wherein the first anchoring element (4) comprises in the direction of a longitudinal axis (12) a support section (13) and an axially extending guide section (14) arranged coaxial thereto, wherein the support section (13) forms a collar (16) that protrudes the guide section (14) in the radial direction, and the second anchoring element (5) features a carrier plate (25) with a fastening plane (26) that faces the connecting surface (11) of the second component (2) and a connecting plane (27) that at least sectionally extends parallel to the fastening plane (26) and faces the lateral surface (10) of the first component (1), as well as at least one bearing recess (28) on the carrier plate (25) for receiving the first anchoring element (4), wherein said bearing recess (28) comprises a bearing section with a support surface (36) that extends essentially parallel to the fastening plane (26) and serves for contacting the support section (13), and the at least one bearing recess (28) continuously extends between the fastening plane (26) and the connecting plane (27) in a longitudinal axis (33) aligned perpendicular to the fastening plane (26), and wherein the longitudinal axis (12) of the first anchoring element (4) and the longitudinal axis (33) of the bearing recess (28) extend parallel to one another, in which method the second component (2) is connected to the first component (1) by engaging the second anchoring element (5) into the first anchoring element (4), wherein the first anchoring element (4) is after the engagement of the anchoring elements (4, 5) perpendicularly adjusted onto the support surface (36) of the second anchoring element (5) by means of an adjusting means (19) realized on the first anchoring element (4) in order to position the second component (2) relative to the first component (1), **characterized in that** the carrier plate (25) is located between the lateral surface (10) of the first component (1) and the connecting surface (11) of the second component (2) when the first and second anchoring elements (4, 5) are engaged, **in that** the collar (16) of the first anchoring element (4) is located between the fastening plane (26) and the connecting plane (27) of the carrier plate (25), and **in that** the adjusting means (19) are formed by bores (20) that are arranged in the collar (16) diametrically opposite of one another.

20. The method according to claim 19, **characterized in that** a retaining element (52) is connected to the first component (1) after positioning the second component (2) relative to the first component (1), and **in that** the position of the second component (2) is thereby fixed with the retaining element (52).

## Revendications

1. Dispositif (3 ; 3") permettant l'assemblage de premières et deuxièmes pièces (1, 2) au moyen d'éléments d'ancrage (4, 5) pouvant être amenés en prise mutuellement, comportant au moins un premier élément d'ancrage (4) apte à être fixé à au moins une face latérale (10) de la première pièce (1) et un deuxième élément d'ancrage (5) apte à être fixé à une surface de raccordement (11) de la deuxième pièce (2), le premier élément d'ancrage (4) comportant dans la direction d'un axe longitudinal (12) une portion d'appui (13) et une portion de guidage (14) disposée coaxialement à cette dernière et orientée dans le sens axial, la portion d'appui (13) formant un collet (16) en saillie dans le sens radial par rapport à la portion de guidage (14), et le deuxième élément d'ancrage (5) comportant une plaque de support (25) avec un plan de fixation (26), orienté vers la surface de raccordement (11) de la deuxième pièce (2), et un plan de raccordement (27), s'étendant au moins en partie parallèlement audit plan de fixation et orienté vers la face latérale (10) de la première pièce (1), ainsi qu'au moins un évidement formant palier (28) prévu sur la plaque de support (25) pour recevoir par zones le premier élément d'ancrage (4), ledit évidement formant palier (28) comporte une zone d'entrée, formant une ouverture d'introduction (30) sur un contour périphérique (29) de la plaque de support (25), et une zone de support avec une surface d'appui (36) sensiblement parallèle au plan de fixation (26) et destinée à recevoir en appui la portion d'appui (13), et ledit au moins un évidement formant palier (28) s'étend, depuis le plan de fixation (26) jusqu'au plan de raccordement (27), dans un axe longitudinal (33), orienté vers le plan de fixation (26) dans le sens vertical, et l'axe longitudinal (12) du premier élément d'ancrage (4) et l'axe longitudinal (33) de l'évidement formant palier (28) étant parallèles entre eux, le dispositif (3 ; 3") comportant, en outre, au moins un moyen de réglage (19), réalisé sur le premier élément d'ancrage (4) et au moyen duquel, après l'assemblage de la première et de la deuxième pièce (1,2) par l'intermédiaire des éléments d'ancrage (4, 5) à amener en prise mutuelle, le premier élément d'ancrage (4) peut être déplacé, par rotation autour de son axe longitudinal, dans le sens vertical vers la surface d'appui (36) du deuxième élément d'ancrage (5), le moyen de réglage (19) étant formé par des forures (20) disposées de manière diamétralement opposée dans le collet (16).

2. Dispositif selon la revendication 1, **caractérisé en ce que** la portion de guidage (14) forme une surface de guidage (23) cylindrique qui s'étend coaxialement à la portion d'appui (13) et dans le sens axial.

3. Dispositif selon la revendication 1 ou 2, **caractérisé en ce que** la portion de guidage (14) forme une rampe (21) qui se rétrécit de manière conique à partir de la portion d'appui (13).

4. Dispositif selon l'une quelconque des revendications 1 à 3, **caractérisé en ce que** le collet (16) forme une surface de réglage (17) orientée perpendiculairement vers l'axe longitudinal (12) du premier élément d'ancrage (4).

5. Dispositif selon l'une quelconque des revendications 1 à 4, **caractérisé en ce que** le premier élément d'ancrage (4) comporte une forure filetée (24) qui s'étend dans le sens axial à travers la portion d'appui (13) et la portion de guidage (14).

6. Dispositif selon l'une quelconque des revendications 1 à 5, **caractérisé en ce que** la zone de support de l'évidement formant palier (28) comporte, en plus, une première zone de guidage (34), adjacente à la zone d'appui (36) dans une première direction axiale perpendiculairement au plan de fixation (26).

7. Dispositif selon la revendication 6, **caractérisé en ce que** la première zone de guidage (34) forme une rampe (38) qui se rétrécit de manière conique à partir de la zone d'appui (36).

8. Dispositif selon la revendication 6 ou 7, **caractérisé en ce que** la première zone de guidage (34) comporte une surface de guidage (37) cylindrique qui s'étend dans une première direction axiale perpendiculairement au plan de fixation (26).

9. Dispositif selon l'une quelconque des revendications 1 à 6, **caractérisé en ce que** la zone de support de l'évidement formant palier (28) comporte, en plus, une deuxième zone de guidage (35), adjacente à la zone d'appui (36) dans une deuxième direction axiale perpendiculairement au plan de fixation (26), la première zone de guidage (34) et la deuxième zone de guidage (35) étant disposées coaxialement.

10. Dispositif selon la revendication 9, **caractérisé en ce que** la deuxième zone de guidage (35) comporte une surface de guidage (39) cylindrique qui s'étend dans une deuxième direction axiale perpendiculairement au plan de fixation (26).

11. Dispositif selon la revendication 1, **caractérisé en ce que** la plaque de support (25) comporte, au moins sur son bord inférieur par référence au sens d'accrochage (48) du deuxième élément d'ancrage (5), au moins une saillie de déviation (49), en saillie sur le contour périphérique (29) et formant une surface de déviation (50) s'étendant en se rétrécissant dans le sens d'accrochage (48) dans le prolongement du plan de raccordement (27) formant la plaque de support (25) parallèlement au plan de fixation (26).

12. Dispositif selon la revendication 1, **caractérisé en ce que** la plaque de support (25) comporte, sur son bord supérieur par référence au sens d'accrochage (49), en face du deuxième élément d'ancrage (5), entre des saillies (53) un évidement (51) pour le positionnement d'un élément de retenue (52).

13. Dispositif selon la revendication 1 ou 12, **caractérisé en ce que** le dispositif (3 ; 3") comporte, en outre, un dispositif de retenue qui comporte un élément de retenue (52) pour immobiliser la deuxième pièce (2) sur la première pièce (1) après l'entrée en prise mutuelle des éléments d'ancrage (4, 5).

14. Dispositif selon la revendication 1, **caractérisé en ce que** la plaque de support (25) comporte des forures de positionnement (44) qui s'étendent perpendiculairement au plan de fixation (26) et passent à travers la plaque de support (25).

15. Dispositif selon l'une quelconque des revendications 1 à 14, **caractérisé en ce que** le deuxième élément d'ancrage (5) et/ou le premier élément d'ancrage (4) peuvent être mis en appui sur une lame d'appui (76), ladite lame d'appui (76) pouvant être fixée à la première pièce (1) par l'intermédiaire d'au moins un troisième élément d'ancrage (77).

16. Dispositif selon la revendication 15, **caractérisé en ce que** la lame d'appui (76) comporte au niveau de sa première extrémité au moins un premier évidement formant palier (80), destiné à recevoir par zones le premier élément d'ancrage (4), et au niveau de sa deuxième extrémité au moins un troisième évidement formant palier (80), destiné à recevoir par zones le troisième élément d'ancrage (77), lesdits évidements formant palier (80) comportant chacun une zone d'entrée, formant une ouverture d'introduction (81) sur un contour périphérique de la lame d'appui (76), et une zone de support avec une surface d'appui (84) qui est sensiblement parallèle à un plan de fixation (78) orienté vers la première pièce (1) et qui est destinée à recevoir en appui la portion d'appui (13) de l'élément d'ancrage (4, 77) correspondant.

17. Dispositif selon la revendication 15 ou 16, **caractérisé en ce que** le troisième élément d'ancrage (77) est réalisé conformément au premier élément d'ancrage (4).

18. Dispositif selon la revendication 15 ou 16, **caractérisé en ce que** le troisième évidement formant palier (80) est réalisé conformément au premier évidement formant palier (28).

19. Procédé permettant l'assemblage de premières et deuxièmes pièces (1, 2) au moyen d'éléments d'ancrage (4, 5) pouvant être amenés en prise mutuellement, comportant au moins un premier élément d'ancrage (4) apte à être fixé à au moins une face latérale (10) de la première pièce (1) et un deuxième élément d'ancrage (5) apte à être fixé à une surface de raccordement (11) de la deuxième pièce (2), le premier élément d'ancrage (4) comportant dans le sens d'un axe longitudinal (12) une portion d'appui (13) et une portion de guidage (14) disposée coaxialement à cette dernière et orientée dans le sens axial, un collet (16) en saillie dans le sens radial par rapport à la portion de guidage (14) étant formé par la portion d'appui (13), et le deuxième élément d'ancrage (5) comportant une plaque de support (25) avec un plan de fixation (26), orienté vers la surface de raccordement (11) de la deuxième pièce (2), et un plan de raccordement (27), s'étendant au moins en partie parallèlement audit plan de fixation et orienté vers la face latérale (10) de la première pièce (1), ainsi qu'au moins un évidement formant palier (28) prévu sur la plaque de support (25) pour recevoir par zones le premier élément d'ancrage (4), ledit évidement formant palier (28) comporte une zone de support avec une surface d'appui (36) sensiblement parallèle au plan de fixation (26) et destinée à recevoir en appui la portion d'appui (13), et ledit au moins un évidement formant palier (28) s'étend, en continu entre le plan de fixation (26) et le plan de raccordement (27), dans un axe longitudinal (33) orienté vers le plan de fixation (26) dans le sens vertical, et l'axe longitudinal (12) du premier élément d'ancrage (4) et l'axe longitudinal (33) de l'évidement formant palier (28) étant parallèles entre eux, dans lequel procédé la deuxième pièce (2) est assemblée à la première pièce (1) par l'accrochage du deuxième élément d'ancrage (5) dans le premier élément d'ancrage (4), après l'accrochage des éléments d'ancrage (4, 5) pour le positionnement de la deuxième pièce (2) par rapport à la première pièce (1), le premier élément d'ancrage (4) est déplacé, par l'intermédiaire d'un moyen de réglage (19) réalisé sur le premier élément d'ancrage (4), dans le sens vertical vers la surface d'appui (36) du deuxième élément d'ancrage (5), **caractérisé en ce qu'**au moment de l'entrée en prise mutuelle du premier et du deuxième élément d'ancrage (4, 5), la plaque de support (25) se situe entre la surface latérale (10) de la première pièce (1) et la surface de raccordement (11) de la deuxième pièce (2), et **en ce que** le collet (16) du premier élément d'ancrage (4) se situe entre le plan de fixation (26) et le plan de raccordement (27) de la plaque de support (25), et **en ce que** le moyen de réglage (19) est formé par des forures (20) disposées de manière diamétralement opposée dans le collet (16).

20. Procédé selon la revendication 19, **caractérisé en ce que**, après le positionnement de la deuxième pièce (2) par rapport à la première pièce (1), un élément de retenue (52) est assemblé à la première pièce (1) et, à cette occasion, la deuxième pièce (2) est immobilisée dans sa position au moyen de l'élément de retenue (52).
